# EUROPEAN PATENT APPLICATION

(11) **EP 4 622 322 A1**
(43) Date of publication of application: **24.09.2025**
(21) Application number: 23910668.5
(22) Date of filing: 26.12.2023
(51) Int. Cl.: H04W 24/02

(54) **COMMUNICATION METHOD AND RELATED APPARATUS**

(30) Priority: 30.12.2022 CN 202211733364
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: MERH-IP Matias Erny Reichl Hoffmann Patentanwälte PartG mbB
(86) International application number: PCT/CN2023/142140
(87) International publication number: WO 2024/140747

(57) **Abstract**

A communication method and a related apparatus are provided. The method includes: An access network device sends a transmission requirement message to a core network device, where the transmission requirement message indicates a transmission parameter that the access network device expects to use when the access network device sends first data to a terminal device. The access network device receives a transmission requirement acknowledgment message from the core network device, where the transmission requirement acknowledgment message indicates a transmission parameter that is allowed by the core network device and that is used when the access network device sends the first data to the terminal device. The access network device sends the first data to the terminal device based on the transmission requirement acknowledgment message. According to the method in this application, local data of the access network device can be transferred to the terminal device through a user plane.

## Description

This application claims priority to Chinese Patent Application No. 202211733364.1, filed with the China National Intellectual Property Administration on December 30, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In current 5th generation (5th generation, 5G) mobile communication technology communication, only data transfer from a core network device to an access network device and then from the access network device to a terminal device through a user plane is supported, and a transmission solution in which local data of the access network device is directly transferred to the terminal device through the user plane is not supported. Therefore, how to transfer the local data of the access network device to the terminal device through the user plane becomes one of problems to be urgently resolved currently.

### SUMMARY

This application provides a communication method and a related apparatus, so that local data of an access network device can be transferred to a terminal device through a user plane.

According to a first aspect, this application provides a communication method. The method is applied to an access network device, and the method includes:
sending a transmission requirement message to a core network device, where the transmission requirement message indicates a transmission parameter that the access network device expects to use when the access network device sends first data to a terminal device;
receiving a transmission requirement acknowledgment message from the core network device, where the transmission requirement acknowledgment message indicates a transmission parameter that is allowed by the core network device and that is used when the access network device sends the first data to the terminal device; and
sending the first data to the terminal device based on the transmission requirement acknowledgment message.

In this embodiment of this application, the access network device sends the transmission requirement message to the core network device. The transmission requirement message includes information such as the transmission parameter that is expected by the access network device and that is for directly sending the first data from the access network device to the terminal device. Further, the access network device designs the corresponding parameter based on the transmission requirement acknowledgment message fed back by the core network device, encapsulates the first data, and sends the encapsulated first data to the terminal device. In this way, a requirement for transfer through a user plane can be satisfied, and adaptation to a current protocol can be implemented without causing an additional problem.

In a possible implementation, the first data is artificial intelligence AI model data.

In a possible implementation, the transmission requirement message indicates one or more of the following transmission parameters:
an identifier of the terminal device, an identifier of the first data, the first data amount corresponding to the first data, a transmission requirement identifier corresponding to the transmission requirement message, a scenario to which the first data is applicable, expected transmission time corresponding to the first data, a quality of service QoS parameter corresponding to the first data, or an identifier of a protocol data unit PDU session corresponding to the first data.

In this implementation, the identifier of the first data may be an index of the first data or the like. The scenario to which the first data is applicable may be an energy saving (energy saving) scenario, a load balancing (load balancing) scenario, a mobility optimization (mobility optimization) scenario, a CSI-RS feedback enhancement scenario, a beam sweeping enhancement scenario, a positioning enhancement scenario, or the like.

In a possible implementation, the QoS parameter includes an identifier of a QoS flow expected to be reused, or the QoS parameter includes an identifier of a QoS flow expected to be newly established.

In this implementation, when the QoS parameter includes the identifier of the QoS flow expected to be newly established, the QoS parameter may further include an allocation and retention priority (allocation and retention priority, ARP), a guaranteed flow bit rate (guaranteed flow bit rate, GFBR), a maximum flow bit rate (maximum flow bit rate, MFBR), an aggregate maximum bit rate (aggregate maximum bit rate, AMBR), a reflective QoS attribute (reflective QoS attribute, RQA), notification control (notification control), a maximum packet loss rate (maximum packet loss rate), and the like. This is not limited herein.

In a possible implementation, a packet data convergence protocol PDCP layer data packet corresponding to the first data includes first indication information, and the first indication information indicates a type of an AI model.

In a possible implementation, the first data corresponds to a plurality of PDCP layer data packets; and
the first indication information further indicates a frame number of the PDCP layer data packet in which the first indication information is located.

In this implementation, when encapsulating the AI model into the PDCP layer packets, the access network device indicates, by indicating a corresponding frame number or frame arrangement rule, whether a related frame is for transmission of the AI model, to ensure that the segmented AI model can be correctly assembled on the terminal device.

In a possible implementation, the method further includes:
sending radio resource control RRC signaling to the terminal device, where the RRC signaling includes first indication information, and the first indication information indicates a type of an AI model.

In a possible implementation, the first data corresponds to a plurality of PDCP layer data packets; and
the first indication information further indicates frame numbers of the plurality of PDCP layer data packets.

In this implementation, the access network device may further indicate, to a UE in a DRB reconfiguration manner, a frame number of a PDCP packet for transmission of the AI model, so that it can also be ensured that the segmented AI model can be correctly assembled on the terminal device.

In a possible implementation, sending the first data to the terminal device based on the transmission requirement acknowledgment message includes:
sending the first data to the terminal device based on the transmission requirement acknowledgment message through a service data adaptation protocol SDAP layer.

According to a second aspect, this application provides a communication method. The method is applied to an access network device, and the method includes:
sending a transmission request message to a core network device, where the transmission request message indicates a transmission parameter that the access network device expects the core network device to use when the core network device sends first data to a terminal device;
receiving a transmission request acknowledgment message from the core network device, where the transmission request acknowledgment message indicates a transmission parameter used by the core network device when the core network device sends the first data to the terminal device; and
receiving a data transmission result of the first data from the core network device.

In this embodiment of this application, the access network device indicates, to the core network device, information such as an identifier of the first data that needs to be delivered to the terminal device, and the core network device sends the first data to the terminal device through a user plane. After completing data transmission, the core network device indicates the data transmission result to the access network device. In this way, a requirement for transfer through the user plane can also be satisfied, and adaptation to a current protocol can be implemented without causing an additional problem.

In a possible implementation, the first data is artificial intelligence AI model data.

In a possible implementation, the transmission request message includes one or more of the following transmission parameters:
an identifier of the terminal device, an identifier of the first data, the first data, a transmission request identifier corresponding to the transmission request message, a scenario to which the first data is applicable, expected transmission time corresponding to the first data, a quality of service QoS parameter corresponding to the first data, or an identifier of a protocol data unit PDU session corresponding to the first data.

According to a third aspect, this application provides a communication method. The method is applied to an access network device, and the method includes:
sending a transmission resource request message to a core network device, where the transmission resource request message indicates time information of a reserved transmission resource expected by the access network device when the access network device sends data to a terminal device;
receiving a reserved-resource indication message from the core network device, where the reserved-resource indication message indicates time information of a reserved transmission resource that is allocated by the core network device and that is for the access network device to send the data to the terminal device; and
sending the data to the terminal device based on the reserved-resource indication message.

In this embodiment of this application, the access network device applies, to the core network device based on a requirement of the access network device, for a segment of reserved resources specially used for sending the data, so that the access network device can send the data to the terminal device by using the reserved resources actually allocated by the core network device to the access network device. In this way, a requirement for transfer through a user plane can be satisfied, and adaptation to a current protocol can be implemented without causing an additional problem.

In a possible implementation, the method further includes:
sending a reserved-resource release message to the core network device, where the reserved-resource release message indicates the core network device to release the reserved transmission resource allocated by the core network device to the access network device; or
receiving a reserved-resource adjustment message from the core network device, where the reserved-resource adjustment message indicates to adjust the reserved transmission resource allocated by the core network device to the access network device.

In this implementation, in a transmission process, the access network device may monitor the transmission process. For example, when a model transmission delay is excessively long, the access network device may apply to the core network device for modification of a subsequently used transmission parameter. For another example, the access network device and the core network device may alternatively interact with each other to release the reserved resource in advance or prolong reservation time.

In a possible implementation, the method further includes:
sending a reserved-resource adjustment request message to the core network device, where the reserved-resource adjustment request message is for requesting the core network device to adjust the allocated reserved transmission resource; and
receiving a reserved-resource adjustment message from the core network device, where the reserved-resource adjustment message indicates to adjust the reserved transmission resource allocated by the core network device to the access network device.

In this implementation, in a transmission process, the access network device may monitor the transmission process, and interact with the core network device to release the reserved resource in advance or prolong reservation time.

In a possible implementation, the first data is artificial intelligence AI model data.

In a possible implementation, the time information of the reserved transmission resource includes a time period of the reserved transmission resource or a deadline of the reserved transmission resource.

In a possible implementation, the transmission resource request message further indicates a transmission parameter that the access network device expects to use when the access network device sends the data to the terminal device.

In a possible implementation, the transmission resource request message indicates one or more of the following transmission parameters:
an identifier of the terminal device, an identifier of the data, a data amount corresponding to the data, a transmission resource request identifier corresponding to the transmission resource request message, a scenario to which the data is applicable, expected transmission time corresponding to the data, a quality of service QoS parameter corresponding to the data, or an identifier of a protocol data unit PDU session corresponding to the data.

According to a fourth aspect, this application provides a communication method. The method is applied to a core network device, and the method includes:
receiving a transmission requirement message from an access network device, where the transmission requirement message indicates a transmission parameter that the access network device expects to use when the access network device sends first data to a terminal device; and
sending a transmission requirement acknowledgment message to the access network device, where the transmission requirement acknowledgment message indicates a transmission parameter that is allowed by the core network device and that is used when the access network device sends the first data to the terminal device.

In a possible implementation, the first data is artificial intelligence AI model data.

In a possible implementation, the transmission requirement message indicates one or more of the following transmission parameters:
an identifier of the terminal device, an identifier of the first data, the first data amount corresponding to the first data, a transmission requirement identifier corresponding to the transmission requirement message, a scenario to which the first data is applicable, expected transmission time corresponding to the first data, a quality of service QoS parameter corresponding to the first data, or an identifier of a protocol data unit PDU session corresponding to the first data.

In a possible implementation, the QoS parameter includes an identifier of a QoS flow expected to be reused, or the QoS parameter includes an identifier of a QoS flow expected to be newly established.

In a possible implementation, a packet data convergence protocol PDCP layer data packet corresponding to the first data includes first indication information, and the first indication information indicates a type of an AI model.

In a possible implementation, the first data corresponds to a plurality of PDCP layer data packets; and
the first indication information further indicates a frame number of the PDCP layer data packet in which the first indication information is located.

According to a fifth aspect, this application provides a communication method. The method is applied to a core network device, and the method includes:
receiving a transmission request message from an access network device, where the transmission request message indicates a transmission parameter that the access network device expects the core network device to use when the core network device sends first data to a terminal device;
sending a transmission request acknowledgment message to the access network device, where the transmission request acknowledgment message indicates a transmission parameter used by the core network device when the core network device sends the first data to the terminal device;
sending the first data to the terminal device based on the transmission request acknowledgment message; and
sending a data transmission result of the first data to the access network device.

In a possible implementation, the first data is artificial intelligence AI model data.

In a possible implementation, the transmission request message includes one or more of the following transmission parameters:
an identifier of the terminal device, an identifier of the first data, the first data, a transmission request identifier corresponding to the transmission request message, a scenario to which the first data is applicable, expected transmission time corresponding to the first data, a quality of service QoS parameter corresponding to the first data, or an identifier of a protocol data unit PDU session corresponding to the first data.

According to a sixth aspect, this application provides a communication method. The method is applied to a core network device, and the method includes:
receiving a transmission resource request message from an access network device, where the transmission resource request message indicates time information of a reserved transmission resource expected by the access network device when the access network device sends data to a terminal device; and
sending a reserved-resource indication message to the access network device, where the reserved-resource indication message indicates time information of a reserved transmission resource that is allocated by the core network device and that is for the access network device to send the data to the terminal device.

In a possible implementation, the method further includes:
receiving a reserved-resource release message from the access network device, where the reserved-resource release message indicates the core network device to release the reserved transmission resource allocated by the core network device to the access network device; or
sending a reserved-resource adjustment message to the access network device, where the reserved-resource adjustment message indicates to adjust the reserved transmission resource allocated by the core network device to the access network device.

In a possible implementation, the method further includes:
receiving a reserved-resource adjustment request message from the access network device, where the reserved-resource adjustment request message is for requesting the core network device to adjust the allocated reserved transmission resource; and
sending a reserved-resource adjustment message to the access network device, where the reserved-resource adjustment message indicates to adjust the reserved transmission resource allocated by the core network device to the access network device.

In a possible implementation, the first data is artificial intelligence AI model data.

In a possible implementation, the time information of the reserved transmission resource includes a time period of the reserved transmission resource or a deadline of the reserved transmission resource.

In a possible implementation, the transmission resource request message further indicates a transmission parameter that the access network device expects to use when the access network device sends the data to the terminal device.

In a possible implementation, the transmission resource request message indicates one or more of the following transmission parameters:
an identifier of the terminal device, an identifier of the data, a data amount corresponding to the data, a transmission resource request identifier corresponding to the transmission resource request message, a scenario to which the data is applicable, expected transmission time corresponding to the data, a quality of service QoS parameter corresponding to the data, or an identifier of a protocol data unit PDU session corresponding to the data.

According to a seventh aspect, this application provides a communication apparatus. The apparatus is used in an access network device, and the apparatus includes:
a transceiver unit, configured to send a transmission requirement message to a core network device, where the transmission requirement message indicates a transmission parameter that the access network device expects to use when the access network device sends first data to a terminal device, where
the transceiver unit is configured to receive a transmission requirement acknowledgment message from the core network device, where the transmission requirement acknowledgment message indicates a transmission parameter that is allowed by the core network device and that is used when the access network device sends the first data to the terminal device; and
a processing unit, configured to send the first data to the terminal device by using the transceiver unit based on the transmission requirement acknowledgment message.

In a possible implementation, the first data is artificial intelligence AI model data.

In a possible implementation, the transmission requirement message indicates one or more of the following transmission parameters:
an identifier of the terminal device, an identifier of the first data, the first data amount corresponding to the first data, a transmission requirement identifier corresponding to the transmission requirement message, a scenario to which the first data is applicable, expected transmission time corresponding to the first data, a quality of service QoS parameter corresponding to the first data, or an identifier of a protocol data unit PDU session corresponding to the first data.

In a possible implementation, the QoS parameter includes an identifier of a QoS flow expected to be reused, or the QoS parameter includes an identifier of a QoS flow expected to be newly established.

In a possible implementation, a packet data convergence protocol PDCP layer data packet corresponding to the first data includes first indication information, and the first indication information indicates a type of an AI model.

In a possible implementation, the first data corresponds to a plurality of PDCP layer data packets; and
the first indication information further indicates a frame number of the PDCP layer data packet in which the first indication information is located.

In a possible implementation, the transceiver unit is further configured to:
send radio resource control RRC signaling to the terminal device, where the RRC signaling includes first indication information, and the first indication information indicates a type of an AI model.

In a possible implementation, the first data corresponds to a plurality of PDCP layer data packets; and
the first indication information further indicates frame numbers of the plurality of PDCP layer data packets.

In a possible implementation, the processing unit is further configured to:
send the first data to the terminal device based on the transmission requirement acknowledgment message through a service data adaptation protocol SDAP layer.

According to an eighth aspect, this application provides a communication apparatus. The apparatus is used in an access network device, and the apparatus includes:
a transceiver unit, configured to send a transmission request message to a core network device, where the transmission request message indicates a transmission parameter that the access network device expects the core network device to use when the core network device sends first data to a terminal device, where
the transceiver unit is configured to receive a transmission request acknowledgment message from the core network device, where the transmission request acknowledgment message indicates a transmission parameter used by the core network device when the core network device sends the first data to the terminal device; and
the transceiver unit is configured to receive a data transmission result of the first data from the core network device.

In a possible implementation, the first data is artificial intelligence AI model data.

In a possible implementation, the transmission request message includes one or more of the following transmission parameters:
an identifier of the terminal device, an identifier of the first data, the first data, a transmission request identifier corresponding to the transmission request message, a scenario to which the first data is applicable, expected transmission time corresponding to the first data, a quality of service QoS parameter corresponding to the first data, or an identifier of a protocol data unit PDU session corresponding to the first data.

According to a ninth aspect, this application provides a communication apparatus. The apparatus is used in an access network device, and the apparatus includes:
a transceiver unit, configured to send a transmission resource request message to a core network device, where the transmission resource request message indicates time information of a reserved transmission resource expected by the access network device when the access network device sends data to a terminal device, where
the transceiver unit is configured to receive a reserved-resource indication message from the core network device, where the reserved-resource indication message indicates time information of a reserved transmission resource that is allocated by the core network device and that is for the access network device to send the data to the terminal device; and
a processing unit, configured to send the data to the terminal device by using the transceiver unit based on the reserved-resource indication message.

In a possible implementation, the transceiver unit is further configured to:
send a reserved-resource release message to the core network device, where the reserved-resource release message indicates the core network device to release the reserved transmission resource allocated by the core network device to the access network device; or
receive a reserved-resource adjustment message from the core network device, where the reserved-resource adjustment message indicates to adjust the reserved transmission resource allocated by the core network device to the access network device.

In a possible implementation, the transceiver unit is further configured to:
send a reserved-resource adjustment request message to the core network device, where the reserved-resource adjustment request message is for requesting the core network device to adjust the allocated reserved transmission resource; and
receive a reserved-resource adjustment message from the core network device, where the reserved-resource adjustment message indicates to adjust the reserved transmission resource allocated by the core network device to the access network device.

In a possible implementation, the first data is artificial intelligence AI model data.

In a possible implementation, the time information of the reserved transmission resource includes a time period of the reserved transmission resource or a deadline of the reserved transmission resource.

In a possible implementation, the transmission resource request message further indicates a transmission parameter that the access network device expects to use when the access network device sends the data to the terminal device.

In a possible implementation, the transmission resource request message indicates one or more of the following transmission parameters:
an identifier of the terminal device, an identifier of the data, a data amount corresponding to the data, a transmission resource request identifier corresponding to the transmission resource request message, a scenario to which the data is applicable, expected transmission time corresponding to the data, a quality of service QoS parameter corresponding to the data, or an identifier of a protocol data unit PDU session corresponding to the data.

According to a tenth aspect, this application provides a communication apparatus. The apparatus is used in a core network device, and the apparatus includes:
a transceiver unit, configured to receive a transmission requirement message from an access network device, where the transmission requirement message indicates a transmission parameter that the access network device expects to use when the access network device sends first data to a terminal device, where
the transceiver unit is configured to send a transmission requirement acknowledgment message to the access network device, where the transmission requirement acknowledgment message indicates a transmission parameter that is allowed by the core network device and that is used when the access network device sends the first data to the terminal device.

In a possible implementation, the first data is artificial intelligence AI model data.

In a possible implementation, the transmission requirement message indicates one or more of the following transmission parameters:
an identifier of the terminal device, an identifier of the first data, the first data amount corresponding to the first data, a transmission requirement identifier corresponding to the transmission requirement message, a scenario to which the first data is applicable, expected transmission time corresponding to the first data, a quality of service QoS parameter corresponding to the first data, or an identifier of a protocol data unit PDU session corresponding to the first data.

In a possible implementation, the QoS parameter includes an identifier of a QoS flow expected to be reused, or the QoS parameter includes an identifier of a QoS flow expected to be newly established.

In a possible implementation, a packet data convergence protocol PDCP layer data packet corresponding to the first data includes first indication information, and the first indication information indicates a type of an AI model.

In a possible implementation, the first data corresponds to a plurality of PDCP layer data packets; and
the first indication information further indicates a frame number of the PDCP layer data packet in which the first indication information is located.

According to an eleventh aspect, this application provides a communication apparatus. The apparatus is used in a core network device, and the apparatus includes:
a transceiver unit, configured to receive a transmission request message from an access network device, where the transmission request message indicates a transmission parameter that the access network device expects the core network device to use when the core network device sends first data to a terminal device, where
the transceiver unit is configured to send a transmission request acknowledgment message to the access network device, where the transmission request acknowledgment message indicates a transmission parameter used by the core network device when the core network device sends the first data to the terminal device; and
   a processing unit, configured to send the first data to the terminal device based on the transmission request acknowledgment message, where
the transceiver unit is configured to send a data transmission result of the first data to the access network device.

In a possible implementation, the first data is artificial intelligence AI model data.

In a possible implementation, the transmission request message includes one or more of the following transmission parameters:
an identifier of the terminal device, an identifier of the first data, the first data, a transmission request identifier corresponding to the transmission request message, a scenario to which the first data is applicable, expected transmission time corresponding to the first data, a quality of service QoS parameter corresponding to the first data, or an identifier of a protocol data unit PDU session corresponding to the first data.

According to a twelfth aspect, this application provides a communication apparatus. The apparatus is used in a core network device, and the apparatus includes:
a transceiver unit, configured to receive a transmission resource request message from an access network device, where the transmission resource request message indicates time information of a reserved transmission resource expected by the access network device when the access network device sends data to a terminal device, where
the transceiver unit is configured to send a reserved-resource indication message to the access network device, where the reserved-resource indication message indicates time information of a reserved transmission resource that is allocated by the core network device and that is for the access network device to send the data to the terminal device.

In a possible implementation, the transceiver unit is further configured to:
receive a reserved-resource release message from the access network device, where the reserved-resource release message indicates the core network device to release the reserved transmission resource allocated by the core network device to the access network device; or
send a reserved-resource adjustment message to the access network device, where the reserved-resource adjustment message indicates to adjust the reserved transmission resource allocated by the core network device to the access network device.

In a possible implementation, the transceiver unit is further configured to:
receive a reserved-resource adjustment request message from the access network device, where the reserved-resource adjustment request message is for requesting the core network device to adjust the allocated reserved transmission resource; and
send a reserved-resource adjustment message to the access network device, where the reserved-resource adjustment message indicates to adjust the reserved transmission resource allocated by the core network device to the access network device.

In a possible implementation, the first data is artificial intelligence AI model data.

In a possible implementation, the time information of the reserved transmission resource includes a time period of the reserved transmission resource or a deadline of the reserved transmission resource.

In a possible implementation, the transmission resource request message further indicates a transmission parameter that the access network device expects to use when the access network device sends the data to the terminal device.

In a possible implementation, the transmission resource request message indicates one or more of the following transmission parameters:
an identifier of the terminal device, an identifier of the data, a data amount corresponding to the data, a transmission resource request identifier corresponding to the transmission resource request message, a scenario to which the data is applicable, expected transmission time corresponding to the data, a quality of service QoS parameter corresponding to the data, or an identifier of a protocol data unit PDU session corresponding to the data.

According to a thirteenth aspect, this application provides a communication apparatus. The communication apparatus may be an access network device, and include a processor, a transceiver, and a memory. The processor, the transceiver, and the memory are coupled. The memory stores a computer program. The processor and the transceiver are configured to invoke the computer program in the memory, so that the communication apparatus performs the method according to either the first aspect or the third aspect.

In a possible design, the communication apparatus may be a chip that implements the method in the first aspect or the third aspect or a device including the chip.

According to a fourteenth aspect, this application provides a communication apparatus. The communication apparatus may be a core network device, and include a processor, a transceiver, and a memory. The processor, the transceiver, and the memory are coupled. The memory stores a computer program. The processor and the transceiver are configured to invoke the computer program in the memory, so that the communication apparatus performs the method according to either the second aspect or the fourth aspect.

In a possible design, the communication apparatus may be a chip that implements the method in the second aspect or the fourth aspect or a device including the chip.

According to a fifteenth aspect, this application provides a communication apparatus. The communication apparatus may be an access network device, and include a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to either the first aspect or the third aspect through a logic circuit or by executing code instructions.

According to a sixteenth aspect, this application provides a communication apparatus. The communication apparatus may be a core network device, and include a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to either the second aspect or the fourth aspect through a logic circuit or by executing code instructions.

According to a seventeenth aspect, this application provides a computer-readable storage medium. The storage medium stores a computer program or instructions. When the computer program or the instructions are executed by a computer, the method according to either the first aspect or the third aspect is implemented.

According to an eighteenth aspect, this application provides a computer-readable storage medium. The storage medium stores a computer program or instructions. When the computer program or the instructions are executed by a computer, the method according to either the second aspect or the fourth aspect is implemented.

According to a nineteenth aspect, this application provides a computer program product. When a computer reads and executes the computer program product, the computer is enabled to perform the method according to either the first aspect or the third aspect.

According to a twentieth aspect, this application provides a computer program product. When a computer reads and executes the computer program product, the computer is enabled to perform the method according to either the second aspect or the fourth aspect.

According to a twenty-first aspect, this application provides a communication system. The communication system includes the access network device according to the seventh aspect, the eighth aspect, the ninth aspect, the thirteenth aspect, or the fifteenth aspect and the core network device according to the tenth aspect, the eleventh aspect, the twelfth aspect, the fourteenth aspect, or the sixteenth aspect.

### BRIEF DESCRIPTION OF DRAWINGS

FIG. 1 is a diagram of a network architecture of a communication system;
FIG. 2 is a diagram of an architecture of another communication system;
FIG. 3 is a schematic flowchart of a communication method according to an embodiment of this application;
FIG. 4 is another schematic flowchart of a communication method according to an embodiment of this application;
FIG. 5 is another schematic flowchart of a communication method according to an embodiment of this application;
FIG. 6 is a diagram of a structure of a communication apparatus according to an embodiment of this application;
FIG. 7 is a diagram of a structure of another communication apparatus according to an embodiment of this application; and
FIG. 8 is a diagram of a structure of another communication apparatus according to an embodiment of this application.

### DESCRIPTION OF EMBODIMENTS

The following further describes specific embodiments of this application in detail with reference to accompanying drawings.

The terms "first", "second", and the like in the specification, claims, and accompanying drawings of this application are for distinguishing between different objects, but are not for describing a specific sequence. In addition, the terms "including" and "having" and any variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification mean that specific features, structures, or characteristics described with reference to embodiments may be included in at least one embodiment of this application. The phrase shown in various locations in the specification does not necessarily refer to a same embodiment, and is not an independent or alternative embodiment exclusive from another embodiment. It is explicitly and implicitly understood by a person skilled in the art that embodiments described in the specification may be combined with another embodiment.

In this application, "at least one" means one or more, "a plurality of" means two or more, "at least two" means two or three or more, and "and/or" is for describing an association relationship between associated objects, which indicates that three relationships may exist. For example, "A and/or B" may indicate three cases: only A exists, only B exists, and both A and B exist. A and B may be singular or plural. The character "/" generally indicates an "or" relationship between the associated objects. "At least one of the following" or a similar expression thereof means any combination of these items, including a single item or any combination of plural items. For example, at least one of a, b, or c may indicate a, b, c, "a and b", "a and c", "b and c", or "a, b, and c", where a, b, and c may be singular or plural.

To better understand embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system like new radio (new radio, NR), a system evolved after 5G like a 6th generation (6th generation, 6G) system, and a wireless local area network (Wireless Local Area Network, WLAN). This is not limited herein.

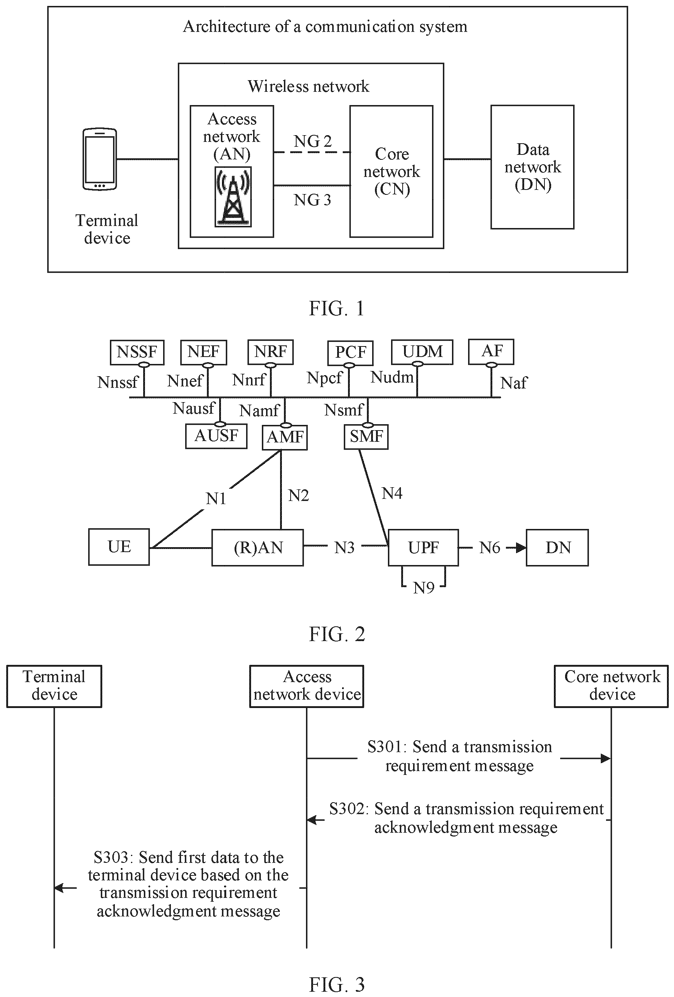

FIG. 1 is a diagram of an architecture of a communication system. As shown in FIG. 1, a terminal device may access a wireless network, to obtain a service of an external network (for example, a data network (data network, DN)) through the wireless network or communicate with another device, for example, another terminal device, through the wireless network. The wireless network includes a (radio) access network ((radio) access network, (R)AN) and a core network (core network, CN). The (R)AN (described as a RAN hereinafter) is for enabling the terminal device to access the wireless network, and the CN is for managing the terminal device and providing a gateway for communicating with the DN. The following separately describes in detail the terminal device, the RAN, the CN, and the DN in the system architecture in FIG. 1.

### I. Terminal device

The terminal device includes a device that provides voice and/or data connectivity for a user. For example, the terminal device is a device that has a wireless transceiver function; and may be deployed on land, where the deployment includes indoor, outdoor, handheld, wearable, or vehicle-mounted deployment, may be deployed on water (for example, on a ship), or may be deployed in the air (for example, on an airplane, a balloon, and a satellite). The terminal device may be a mobile phone (mobile phone), a tablet computer (Pad), a computer having the wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, a user equipment (user equipment, UE), an access terminal, the vehicle-mounted terminal, a terminal in the industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform).

### II. RAN

The RAN may include one or more RAN devices (in other words, access network devices), and interfaces between the access network devices and the terminal device may be Uu interfaces (which are also referred to as air interfaces). Certainly, in communication evolved after 5G, names of these interfaces may remain unchanged, or may be replaced with other names. This is not limited in this application.

The access network device is a node or a device that enables the terminal device to access the wireless network. The access network device includes, for example, but is not limited to, a next generation NodeB (next generation NodeB, gNB), an evolved NodeB (evolved NodeB, eNB), a next generation evolved NodeB (next generation eNB, ng-eNB), a radio backhaul device, a radio network controller (radio network controller, RNC), a NodeB (NodeB, NB), a home base station (home evolved NodeB, HeNB or home NodeB, HNB), a baseband unit (baseband unit, BBU), a transmission reception point (transmission reception point, TRP), a transmitting point (transmitting point, TP), a mobile switching center, and a device that has a base station function in device-to-device (Device-to-Device, D2D), vehicle-to-everything (vehicle-to-everything, V2X), and machine-to-machine (machine-to-machine, M2M) communication in a 5G communication system, and may further include a central unit (central unit, CU) and a distributed unit (distributed unit, DU) in a cloud radio access network (cloud radio access network, C-RAN) system, and a network device in a non-terrestrial network (non-terrestrial network, NTN) communication system, that is, may be deployed on a high-altitude platform, a satellite, or the like. This is not specifically limited in embodiments of this application.

### III. CN

The CN may include one or more CN devices (which may alternatively be understood as network element devices, functional network elements, logical network elements, network elements, or entities).

FIG. 2 is a diagram of an architecture of another communication system. The communication system is a system architecture in a 5G non-roaming scenario. As shown in FIG. 2, the communication system includes the following logical network elements: a network slice selection function (network slice selection function, NSSF), a network exposure function (network exposure function, NEF), a network repository function (network repository function, NRF), a policy control function (policy control function, PCF), a unified data management (unified data management, UDM), an application function (application function, AF), an authentication server function (authentication server function, AUSF), an access and mobility management function (access and mobility management function, AMF), a session management function (session management function, SMF), a UE, and a (radio) access network ((radio) access network, (R)AN), a user plane function (user plane function, UPF), and a data network (data network, DN).
1. User plane network element: The user plane network element serves as an interface to the data network, and completes functions such as user plane data forwarding, session/flow level-based charging statistics collection, and bandwidth throttling, that is, packet routing and forwarding, quality of service (quality of service, QoS) handling for user plane data, and the like.
   In a 5G communication system, the user plane network element may be the UPF network element.
2. Authentication server: The authentication server performs security authentication on a user. In the 5G communication system, the authentication server may be the AUSF network element.
3. Mobility management network element: The mobility management network element is mainly for mobility management, access management, and the like. In the 5G communication system, the access management network element may be the AMF network element, and mainly performs functions such as mobility management and access authentication/authorization. In addition, the mobility management network element is further responsible for transferring a user policy between a terminal and the PCF network element.
4. Session management network element: The session management network element is mainly for session management, assignment and management of an internet protocol (internet protocol, IP) address of the user equipment, selection and control of the user plane function, termination of interfaces toward policy control and charging functions, downlink data notification, and the like.
   In the 5G communication system, the session management network element may be the SMF network element, and completes assignment of an IP address of the terminal, UPF selection, charging and QoS policy control, and the like.
5. Application network element: In the 5G communication system, the application network element may be the AF network element, represents an application function of a third party or an operator, is an interface for obtaining external application data in a 5G network, and is mainly configured to transfer a requirement of an application side for a network side.
6. Unified data management network element: The unified data management network element is responsible for management of a user identifier, subscription data, and authentication data, and registration management of a serving network element of the user. In the 5G communication system, the unified data management network element may be the UDM network element.
7. Policy control network element: The policy control network element includes a user subscription data management function, a policy control function, a charging policy control function, quality of service (quality of service, QoS) control, and the like, is configured to: provide a unified policy framework for governing network behavior, provide policy rule information for a control plane function network element (for example, the AMF or SMF network element), and so on.
   In the 5G communication system, the policy control network element may be the PCF.
8. Network function repository function network element: The network function repository function network element provides a storage function and a selection function of network functional entity information for another core network element. In the 5G communication system, the network element may be the NRF network element.
9. Network exposure network element: In the 5G communication system, the network exposure network element may be the NEF network element, is mainly configured to expose a service and a capability of a 3GPP network function to the AF, and may also enable the AF to provide information for the 3GPP network function.
10. Network slice selection function network element: The network slice selection function network element is responsible for selecting a network slice for the UE. In the 5G communication system, the application network element may be the NSSF network element.

The foregoing function network element may be a network element in a hardware device, a software function running on dedicated hardware, or a virtualization function instantiated on a platform (for example, a cloud platform). One or more services may be obtained through division based on the foregoing function network element. Further, a service independent of a network function may exist. In this application, an instance of the function network element, an instance of the service included in the function network element, or an instance of the service independent of the network function may be referred to as a service instance.

In addition, although not shown, the CN may further include other possible network elements such as a service communication proxy (service communication proxy, SCP) network element, a network slice admission control function (network slice admission control function, NSACF) network element, a unified data repository (unified data repository, UDR) network element, and an authentication, authorization, and accounting (authentication, authorization, and accounting, AAA) network element.

It should be learned that, in the 5G communication system, the function network elements may have names of the function network elements shown in FIG. 2. In a communication system (for example, a 6G communication system) evolved after 5G, the function network elements may still have the names of the function network elements shown in FIG. 2, or may have other names. For example, in the 5G communication system, the policy control network element may be the PCF. In the communication system (for example, the 6G communication system) evolved after 5G, the policy control function may still be the PCF, or may have another name. This is not limited in this application.

Nnssf is a service-oriented interface provided by the NSSF, Nnef is a service-oriented interface provided by the NEF, Nnrf is a service-oriented interface provided by the NRF, Npcf is a service-oriented interface provided by the PCF, Nudm is a service-oriented interface provided by the UDM, Naf is a service-oriented interface provided by the AF, Nausf is a service-oriented interface provided by the AUSF, Namf is a service-oriented interface provided by the AMF, Nsmf is a service-oriented interface provided by the SMF, N1 is a reference point between the UE and the AMF, N2 is a reference point between the (R)AN and the AMF, N3 is a reference point between the (R)AN and the UPF, N4 is a reference point between the SMF and the UPF, N6 is a reference point between the UPF and the DN, and N9 is a reference point between UPFs. It should be noted that, for meanings of Nnssf, Nnef, Nnrf, Npcf, Nudm, Naf, Nausf, Namf, Nsmf, N1, N2, N3, N4, N6, and N9 in FIG. 2, refer to meanings defined in a related standard protocol. This is not limited herein.

### IV DN

The DN may also be referred to as a packet data network (packet data network, PDN), is a network located outside an operator network, and is mainly responsible for providing a data transmission service for the user, for example, an IP multimedia service (IP multimedia service, IMS) or an internet (internet). The UE accesses the DN by establishing sessions (sessions) among the UE, the RAN, the UPF, and the DN.

It should be noted that, in FIG. 2, the network functions and the entities may exchange messages through different interfaces. For example, the UE and the AMF entity may interact with each other through an N1 interface, where an exchanged message is referred to as an N1 message. Some interfaces are implemented as service-oriented interfaces. The UE, the RAN device, the UPF entity, and the DN in FIG. 2 may be referred to as network functions and entities on a data plane, and are configured to carry service data. Transmission of user-layer data traffic may be performed by using a PDU session established between the UE and the DN, and the user-layer data traffic passes through two network function entities: the RAN device and the UPF entity. Other network functions and entities may be collectively referred to as network functions and entities on a control plane, are configured to carry signaling messages, and are mainly responsible for functions such as authentication and authorization, registration management, session management, mobility management, and policy control, to ensure reliability and stability of transmission of the user-layer data traffic.

It should be noted that a first device described in embodiments of this application may be an existing network element like the AMF, or a first device may be a newly designed network element like a tag management function (tag management function, TMF). This is not limited herein. Optionally, the first device may alternatively be a tag or the like. This is specifically determined based on an actual scenario, and is not limited herein. A second device described in embodiments of this application may be the authentication, authorization, and accounting (authentication, authorization, and accounting, AAA) device, the UDM, or the like. This is not limited herein.

It should be noted that a name of a network element in this application may also be referred to as another name. This is not limited herein. It should be noted that a new network element or a newly designed network element described in this application may be an entirely new network element, may be an extension, update, addition, or the like of a function of an existing network element, or may be a combination, integration, or the like of functions of a plurality of existing network elements. This is not limited herein.

To facilitate understanding of related content in embodiments of this application, the following describes some knowledge needed in the solutions in this application. It should be noted that these explanations are intended to make embodiments of this application easier to understand, but should not be considered as a limitation on the protection scope claimed in this application.

### 1. Artificial intelligence (artificial intelligence, AI)

The 3rd generation partnership project (3rd generation partnership project, 3GPP) R17 proposes to apply an AI model to a new radio (new radio, NR) communication system, to improve network performance and user experience through intelligent data collection and analysis.

The AI model may be understood as a calculation method for generating a specific output by using an artificial intelligence/machine learning technology with a given input. It should be noted that the AI model described in embodiments of this application may be a complete AI model that may be independently run on a UE (a format and a compiling environment of the AI model are not limited), or may be an AI-related functional module that runs on a UE side to obtain the specific output for use on a gNB side. This is not limited herein.

### 2. AI-based use case (use case)

Currently, the 3GPP designs several basic application scenarios for application of the AI on a RAN side through working groups such as a RAN 3 and a RAN 1. The RAN 3 includes ① energy saving (energy saving), ② load balancing (load balancing), and ③ mobility optimization (mobility optimization). The RAN 1 includes ① channel state information reference signal (channel state information reference signal, CSI-RS) feedback enhancement, ② beam sweeping enhancement, and ③ positioning enhancement.
① Energy saving: A base station collects load, energy consumption, and energy efficiency information of the base station and a neighboring cell, trajectory information and a measurement result of the UE, and the like, to predict a trend of the load of the base station, and timely take, without affecting network coverage and user access, an appropriate energy saving measure with reference to cell usage, a key performance indicator (key performance indicator, KPI) requirement, and the like. A simplest energy saving policy includes directly deactivating a cell. Other energy saving policies include carrier shutdown, channel shutdown, slot shutdown, transmit power reduction, and the like. A complex energy saving policy further includes a combination of the foregoing energy saving measures. When the network coverage is affected or a UE access requirement and a service requirement cannot be satisfied, a current energy saving policy needs to be modified, or direct restoration to a normal operating state is performed, and re-predicting the load or changing the used AI model to perform re-inference is considered.
② Load balancing: The base station collects the load, the energy consumption, and the energy efficiency information of the base station and the neighboring cell, the trajectory information and the measurement result of the UE, and the like, to predict the trend of the load of the base station, and appropriately select some UEs to enable the some UEs to be handed over to the neighboring cell or receive a UE from the neighboring cell with reference to the cell usage, the KPI requirement, and the like, so that load levels of base stations in an entire network area are close, to reduce a case in which some base stations are overloaded and a normal service is affected while some base station resources are idle. However, prediction accuracy is not 100%. As a result, UE selection is inappropriate or a target cell for handover is inappropriate, and a handover failure occurs or a UE service is affected; a load balancing effect is poor due to inaccurate load prediction; or an original load balancing policy is no longer applicable due to a temporary exception change on the load. In this case, the current load balancing policy needs to be exited or modified, and re-predicting the load or changing the used AI model to perform re-inference is considered.
③ Mobility optimization: The base station collects historical trajectory information of the UE, and predicts a future trajectory of the UE based on measurement information of the UE. Based on the predicted trajectory, whether the UE is to be handed over is determined in advance, a handover configuration is delivered in advance, and the target cell is notified to prepare an access resource. This reduces a delay in a UE handover process and a probability of a handover or access failure. However, a trajectory prediction accuracy rate is not 100%. As a result, when the predicted trajectory is incorrect, the UE handover fails, and the service is interrupted. In this case, performing model retraining and re-inference with reference to an abnormal case needs to be considered, or changing the model need to be considered, to avoid subsequent occurrence of a similar abnormal case on the UE again.
④ A main procedure of the CSI-RS feedback enhancement is as follows: 1. The base station first exchanges a dictionary with the UE. Generally, the base station trains a model in advance based on a capability of the UE and a requirement of the base station, and then delivers an encoder (Encoder) tool and a quantizer (Quantizer) tool to the UE. 2. The UE compresses and quantizes, based on a measured channel matrix result and the existing dictionary, a matrix that is to be fed back, and transfers a result B to a base station side. 3. The base station side reversely restores a raw channel matrix based on the dictionary and data that is reported by the UE.
⑤ A main procedure of beam management enhancement is as follows: 1. Generate an initial model. A sparse sweeping matrix is obtained through training by reporting an SSB full-beam sweeping result by a specific quantity of UEs. This matrix is usually exclusive to each cell. 2. The base station delivers a sparse model to the UE (a manner like via a system information block (system information block, SIB) message may be considered), and the UE performs P1-phase beam sweeping based on the matrix. 3. The base station infers an optimal CSI-RS beam based on a sparse sweeping result of the UE, and starts to perform P2-phase sweeping on the UE. The UE feeds back an ID of the optimal CSI-RS beam.
⑥ A main procedure of the positioning enhancement is as follows: 1. Collect raw data by using a reference UE controlled by an operator. 2. A location management function (location management function, LMF) node (a non-RAN side node) and a gNB separately train a model. An LMF model may be for inferring final positioning (longitude and latitude, and the like). A gNB model may be for inferring a line of sight (line of sight, LOS)/non-line of sight (non-line of sight, NLOS) determining result.

### 3. Protocol data unit (protocol data unit, PDU)

In a hierarchical network structure like an open systems interconnection (OSI) model, the protocol data unit (PDU) is to be established at each layer of a transmission system. The PDU includes information from an upper layer and information added by an entity at a current layer. The PDU is then delivered to a next lower layer. A physical layer actually performs transmission of these PDUs in a form of a framed bitstream, but these PDUs are constructed by higher layers of a protocol stack. A receiving system delivers these packets upward through the protocol stack, and strips off related information in the PDU at each layer of the protocol stack. It is important that information added to the PDU at each layer is assigned to a peer layer of another system. This is how peer layers coordinate a communication session.

### 4. PDU session (session)

In a mobile communication system, a session refers to information exchange between the UE and a specific internet protocol (internet protocol, IP) address on a network side. In a 5G network, a basic granularity unit of session management is the PDU. One PDU session may include a plurality of quality of service (quality of service, QoS) flows, a plurality of data radio bearers (data radio bearers, DRBs), and an NG-U tunnel between the gNB and a core network UPF network element.

Establishment of the PDU session may be initiated by a core network or the UE, and is usually initiated on a core network side for downlink transmission. A main procedure includes: The core network initiates a PDU session resource establishment request to the gNB on an NG interface via an AMF, and the gNB feeds back a PDU session resource establishment result to the core network on the NG interface. A setting of an established PDU session resource may be further modified between the core network and the gNB.

### 5. NG-U tunnel and PDCP layer

A tunnel, namely, the NG-U tunnel, established between the gNB and the core network UPF network element is usually carried by an N3 interface. After receiving data from a data gateway, the UPF performs packet header encapsulation, and sends the encapsulated data to the PDCP layer of the gNB. A structure of a packet header sent to the PDCP layer is shown in Table 1 below:

**Table 1**

| Bits | | | | | | | | Number of octets |
|---|---|---|---|---|---|---|---|---|
| 7 | 6 | 5 | 4 | 3 | 2 | 1 | 0 | |
| PDU Type (=0) | | | | QMP | SNP | MSNP | Spare | 1 |
| PPP | RQO | QoS Flow Identifier | | | | | | 1 |
| PPI | | | Spare | | | | | 0 or 1 |
| DL Sending Time Stamp | | | | | | | | 0 or 8 |
| DL QFI Sequence Number | | | | | | | | 0 or 3 |
| DL MBS QFI Sequence Number | | | | | | | | 0 or 4 |
| Padding | | | | | | | | 0 to 3 |

Meanings of main information are as follows:
PDU Type: indicates 0 (DL) or 1 (UL).
QMP: indicates whether there is a DL sending time stamp in a DL PDU session information frame.
SNP: indicates whether there is a QFI number number.
MSNP: indicates whether there is a QFI number number of a multicast broadcast service (multicast broadcast service, MBS).
PPP: indicates whether there is a paging policy indicator.
RQI: The UE will create a UE-derived QoS rule for an uplink service based on a received DL service, depending on whether an RQA has been activated for the QoS flow.
QoS Flow Identifier: identifies the QoS flow.
PPI: is for distinguishing between different paging policies.
DL Sending Time Stamp: time for sending the downlink PDU session information frame by the UPF.
DL QFI Sequence Number: is for coordinating transmission of an N-PDU data packet.
DL MBS QFI Sequence Number: a number of a downlink multicast QoS flow.
Spare: a spare field.
Padding: a padding field.

Generally, after receiving a packet sent by the UPF, the PDCP layer performs block encapsulation, where a maximum capacity of each block is 9000 bytes; and adds a packet header to each block, and sends, to an RLC layer, the block to which the packet header has been added.

It should be noted that, in current 5G communication, only data transfer from a core network device to an access network device and then from the access network device to a terminal device through a user plane is supported, and a transmission solution in which local data of the access network device is directly transferred to the terminal device through the user plane is not supported. Therefore, how to transfer the local data of the access network device to the terminal device through the user plane becomes one of problems to be urgently resolved currently.

It should be noted that the local data of the access network device in embodiments of this application may be understood as data information that needs to be transferred from the access network device (for example, a gNB) to the terminal device (for example, a UE), for example, data such as an AI model or a voice service. This is not limited herein.

The following describes in detail a communication method and a communication apparatus provided in this application.

FIG. 3 is a schematic flowchart of a communication method according to an embodiment of this application. As shown in FIG. 3, the communication method includes the following steps S301 to S303. The method shown in FIG. 3 may be performed by an access network device and a core network device. Alternatively, the method shown in FIG. 3 may be performed by a chip in an access network device and a chip in a core network device. It should be noted that FIG. 3 is a schematic flowchart of a method embodiment of this application, and shows detailed communication steps or operations of the method. However, these steps or operations are merely examples. Other operations or variants of various operations in FIG. 3 may be further performed in embodiments of this application. In addition, the steps in FIG. 3 may be separately performed in a sequence different from that shown in FIG. 3, and possibly, not all operations in FIG. 3 need to be performed. FIG. 3 is described by using an example in which the access network device and the core network device perform the method.

S301: The access network device sends a transmission requirement message to the core network device. Accordingly, the core network device receives the transmission requirement message from the access network device.

**In** some feasible implementations, the transmission requirement message may indicate a transmission parameter that the access network device expects to use when the access network device sends first data to a terminal device. For example, the transmission requirement message may indicate one or more of the following expected transmission parameters: an identifier of the terminal device, an identifier of the first data, a first data amount corresponding to the first data, a transmission requirement identifier corresponding to the transmission requirement message, a scenario to which the first data is applicable, a number of a scenario to which the first data is applicable, a number of a function in a scenario to which the first data is applicable, expected transmission time corresponding to the first data, a QoS parameter corresponding to the first data, or an identifier of a PDU session corresponding to the first data. That is, the transmission requirement message may directly indicate the scenario, may indicate the number of the agreed scenario, or may indicate the number of the function in the agreed scenario.

The identifier of the terminal device may be for marking the terminal device to which data needs to be sent. For example, the identifier of the terminal device may be specifically an NG application protocol (NG application protocol, NGAP) ID applicable to an NG interface. This is not limited herein. The identifier of the first data may be for marking the first data that needs to be sent to the terminal device. For example, the first data may be specifically an AI model or AI model data, and the identifier of the first data may be global universal model ID information, may be index information agreed on by the access network device and the core network device, or may be a number of a function corresponding to an agreed model having the function. This is not limited herein. It may be understood that the AI model in this embodiment of this application may be a complete AI model that may be independently run on a UE (a format and a compiling environment of the AI model are not limited), or may be an AI-related functional module that runs on a UE side to obtain a specific output for use on an access network device side, or the like. This is not limited herein. Optionally, the first data may alternatively be another non-AI-related functional module, other non-AI-related data, or the like. This is not limited in this embodiment of this application. However, the following mainly uses an example in which the first data is the AI model for description. The first data amount indicates a specific data amount of the first data that needs to be sent, for example, 500 MB. The transmission requirement identifier is for marking the transmission requirement message sent by the access network device this time. The scenario to which the first data is applicable may be one or more of ① energy saving, ② load balancing, ③ mobility optimization, ④ CSI-RS feedback enhancement, ⑤ beam sweeping enhancement, ⑥ positioning enhancement, or the like. Optionally, the scenario to which the first data is applicable may alternatively be another scenario in which AI is needed for resolution in the future. The foregoing six scenarios are merely examples. This is not limited herein. The expected transmission time corresponding to the first data is time that can be for completing an AI model transmission process and that is expected or required by the access network device; and may be expressed based on any time length unit, for example, 60 seconds or one minute, or may be a specific deadline for completing the transmission process, for example, before 3 p.m. The expected QoS parameter indicated by the transmission requirement message may be generated by the access network device with reference to a current air interface load status and a current resource load status. For example, the QoS parameter includes an identifier of a QoS flow expected to be reused, or the QoS parameter includes an identifier of a QoS flow expected to be newly established. For example, the identifier of the QoS flow may be a quality of service flow identifier (QoS flow identifier, QFI) or a 5G quality of service identifier (5G QoS Identifier, 5QI). This is not limited herein. Optionally, when the QoS parameter includes the identifier of the QoS flow expected to be newly established, the QoS parameter may further include information such as an allocation and retention priority (allocation and retention priority, ARP), a guaranteed flow bit rate (guaranteed flow bit rate, GFBR), a maximum flow bit rate (maximum flow bit rate, MFBR), an aggregate maximum bit rate (aggregate maximum bit rate, AMBR), a reflective QoS attribute (reflective QoS attribute, RQA), notification control (notification control), and a maximum packet loss rate (maximum packet loss rate). This is not limited herein. Optionally, when the QoS parameter includes the identifier of the QoS flow expected to be reused, the QoS parameter may further include an expected QoS parameter obtained through modification, for example, an expected maximum packet loss rate obtained through modification, or information about a difference obtained by subtracting a current maximum packet loss rate from the expected maximum packet loss rate obtained through modification. This is not limited herein.

It should be noted that the transmission requirement message sent by the access network device to the core network device may include one or more terminal device identifiers. In other words, a quantity of terminal devices is not limited in this embodiment of this application, and a quantity of AI models on which transmission is performed is not limited for each terminal device. Optionally, the transmission requirement identifier (namely, a transmission requirement number) may be generated based on an identifier of each terminal device, or may be generated based on an ID of the AI model sent to each terminal device. This is not limited herein. In other words, the transmission requirement number may be at a UE level. That is, a number may be accordingly allocated to each UE having a model transmission requirement. Alternatively, the transmission requirement number may be at a level of a model in the UE. For example, transmission of a model A in a UE 1 may correspond to a transmission number.

For example, when the access network device needs to transmit a plurality of AI models to the UE, a transmission parameter expected for each AI model may be separately indicated in a list. In addition, one AI model may alternatively be further disassembled into different parts for transmission performed based on different QoS flows. As shown in Table 2 below:

**Table 2**

| Transmission requirement identifier | Identifier of a terminal device | Scenario to which first data is applicable | Identifier of the first data | Whether to newly establish a QoS flow | Whether to reuse an existing QoS flow | Expected QoS parameter | Expected QoS parameter obtained through modification | Data amount, in a unit of megabytes (MB) | Expected transmission time, in a unit of seconds (s) |
|---|---|---|---|---|---|---|---|---|---|
| Identifier 1 | UE A | Energy saving | Model X-part 1 | Yes | No | Separately refer to the foregoing descriptions of the QoS parameter | | X1 MB | XX1s |
| | UE B | | Model X-part 2 | No | Yes | | | X2 MB | XX2s |
| | UE C | | Model Y | Yes | No | | | Y MB | YYs |

S302: The core network device sends a transmission requirement acknowledgment message to the access network device. Accordingly, the access network device receives the transmission requirement acknowledgment message from the core network device.

In some feasible implementations, after receiving the transmission requirement message sent by the access network device, the core network device may reply to the access network device with the transmission requirement acknowledgment message based on factors such as the transmission parameter expected to be used in the requirement and whether the requirement affects current normal data transmission. The transmission requirement acknowledgment message may indicate a transmission parameter that is allowed by the core network device and that is used when the access network device sends the first data to the terminal device. In other words, the expected transmission parameter indicated by the transmission requirement message is a transmission parameter recommended by the access network device, and the allowed transmission parameter indicated by the transmission requirement acknowledgment message is a transmission parameter actually used by the access network device.

For example, the transmission requirement acknowledgment message may indicate one or more of the following transmission parameters that are allowed to be used: an identifier of the terminal device, an identifier of the first data, a first data amount corresponding to the first data, a transmission requirement identifier corresponding to the transmission requirement message, a scenario to which the first data is applicable, transmission time corresponding to the first data, a QoS parameter corresponding to the first data, or an identifier of a PDU session corresponding to the first data.

For example, the transmission requirement acknowledgment message may be one bit. When a value of the bit is 1, the transmission requirement acknowledgment message indicates that the core network device agrees to let the access network device use all transmission parameters expected by the access network device. When a value of the bit is 0, the transmission requirement acknowledgment message indicates that the core network device does not agree to let the access network device use all transmission parameters expected by the access network device. Alternatively, when a value of the bit is 0, the transmission requirement acknowledgment message indicates that the core network device agrees to let the access network device use all transmission parameters expected by the access network device. When a value of the bit is 1, the transmission requirement acknowledgment message indicates that the core network device does not agree to let the access network device use all transmission parameters expected by the access network device. This is not limited herein.

In another example, the transmission requirement acknowledgment message may alternatively indicate that the core network device agrees or does not agree to let the access network device use some transmission parameters expected by the access network device. Optionally, the transmission requirement acknowledgment message may further indicate a reason for agreement or disagreement. For example, for a format of the transmission requirement acknowledgment message, refer to Table 2 in step S301. Details are not described herein again.

It should be noted that when the transmission requirement acknowledgment message indicates that the transmission parameter that is expected to be used and that is sent by the access network device in step S301 is not agreed to, the transmission requirement acknowledgment message may further indicate a transmission parameter obtained through adjustment/modification performed by the core network device. The transmission parameter obtained through adjustment/modification is a parameter that the core network device agrees/allows to use. It may be understood that the transmission requirement acknowledgment message may directly indicate a specific value of the transmission parameter obtained through adjustment/modification, or may indicate information about a difference obtained by subtracting the transmission parameter expected by the access network device from the transmission parameter obtained through adjustment. Therefore, the access network device may determine, based on the expected transmission parameter and the information about the difference, the transmission parameter obtained through adjustment.

For example, assuming that transmission parameters that are expected to be used and that are indicated by the transmission requirement message are sending an AI model 1 and an AI model 2 to the UE 1 and sending the AI model 2 to a UE 2, the transmission requirement acknowledgment message may indicate that transmission parameters allowed to be used are sending the AI model 1 to the UE 1 and sending the AI model 2 to the UE 2.

It should be noted that the core network device may choose to include, in a charging consideration range, a finally determined amount of the data transferred by the access network device to the terminal device.

S303: The access network device sends the first data to the terminal device based on the transmission requirement acknowledgment message. Accordingly, the terminal device receives the first data from the access network device.

In some feasible implementations, that the access network device sends the first data to the terminal device based on the transmission requirement acknowledgment message may be understood as that the access network device sends the first data to the terminal device based on the transmission requirement acknowledgment message through a service data adaptation protocol (service data adaptation protocol, SDAP) layer. In other words, after the access network device receives the transmission requirement acknowledgment message fed back by the core network device, the SDAP layer of the access network device maps a QoS flow to a DRB. It should be noted that, because the first data (for example, the AI model) is locally in the access network device, the access network device may choose to encapsulate the to-be-transmitted AI model based on the encapsulation format (as shown in Table 1) of the data sent by the UPF to the access network device, or may choose to encapsulate the to-be-transmitted AI model in a manner of indicating only a key field. For example, a structure of a packet header sent by the SDAP layer to a PDCP layer is as follows:
PDU Type: According to a current protocol, 0 indicates a downlink PDU. The AI model is sent from a gNB to the UE via downlink. Therefore, PDU Type should be set to 0.

QMP: A value thereof is based on internal implementation of the gNB. If the gNB expects to further monitor a transmission delay of the AI model, setting QMP to 1 may be considered. If the gNB does not expect to further monitor a transmission delay of the AI model, QMP is set to 0.

DL Sending Time Stamp: If QMP is set to 1, DL Sending Time Stamp should be set to a time stamp for delivering the PDU to the SDAP layer by the gNB internally.

SNP: If there is a QFI number subsequently, SNP is set to 1. If there is no QFI number subsequently, SNP is set to 0. In a design of this solution, the gNB performs frame interpolation on the AI model from a perspective of the DRB, and a frame number of the QoS flow is for a process of transmission from the UPF to the gNB. Therefore, SNP should be set to 0. However, if the QoS flow is newly established for the AI model, SNP may be set to 1.

MSNP, PPP, and RQI: MSNP, PPP, and RQI are set to 0 because no MBS, paging (Paging), and reflective QoS are involved.

Spare field: Indication information may be added to indicate whether the current PDU is for transmission of the AI model, and specific AI model identification information is further added.

QFI: QFI is set to a specific value based on a feedback from a core network (consistent with a QFI of a specified existing QoS flow, or a QFI that is of the newly established QoS flow and that is indicated by the core network, namely, a QoS flow parameter indicated by the core network).

DL QFI Sequence Number: If the QoS flow is newly established, it may be considered that the gNB internally maintains the newly established QoS flow for transmission of the AI model.

DL MBS QFI Sequence Number: The field is not set.

It should be noted that the SDAP layer of the access network device maps the corresponding QoS flow to the DRB, namely, a PDCP entity, based on the QoS parameter corresponding to the AI model. When performing encapsulation, the PDCP entity may encapsulate a PDCP layer data packet (PDCP packet for short) based on a packet size limitation that does not exceed 9 KB, and additionally indicate whether the packet is a transmission packet of the AI model (or may indicate, to the UE in a DRB reconfiguration manner, a frame number or a number of a PDCP packet for transmission of the AI model). If indication is directly performed in the PDCP packet, the Spare field in the PDCP packet header may be used to add an indication. For example, that transmission content of the packet is the AI model, and whether the packet is a 1^{st} packet and/or whether the packet is a last packet are indicated. An AI model whose transmission is performed via the packet may be further indicated. For example, a model ID, the index information agreed on by the access network device and the UE, or the number of the function corresponding to the agreed model having the function is added. If indication is performed in the DRB reconfiguration manner, the access network device may choose to indicate a frame number or a number of a specific PDCP packet for transmission of the AI model or indicate a frame arrangement rule of the PDCP packet for transmission of the AI model. For example, all packets whose frame numbers or numbers mod 5=0 are for transmission of the AI model. Optionally, the identification information of the model whose transmission is performed via the PDCP packet may alternatively be indicated in the DRB reconfiguration indication manner.

In other words, a PDCP layer data packet corresponding to the first data may directly include first indication information, and the first indication information indicates a type of the AI model. Optionally, when the first data corresponds to a plurality of PDCP layer data packets, that is, when the first data is disassembled into the plurality of PDCP layer data packets for transmission, the first indication information further indicates a frame number or a frame arrangement rule of a PDCP layer data packet in which the first indication information is located, to ensure that the segmented AI model can be correctly assembled on the UE side. Optionally, in another implementation, the access network device may further send radio resource control (radio resource control, RRC) signaling to the terminal device. The RRC signaling may be specifically a DRB reconfiguration message. The RRC signaling includes first indication information, and the first indication information indicates a type of the AI model. Optionally, when the first data corresponds to a plurality of PDCP layer data packets, the first indication information further indicates frame numbers or a frame arrangement rule of the plurality of PDCP layer data packets, to ensure that the segmented AI model can be correctly assembled on the UE side.

In this embodiment of this application, each time the access network device has a data sending requirement, the access network device needs to send the transmission requirement message to the core network device. The transmission requirement message includes information such as the transmission parameter that is expected by the access network device and that is for directly sending the first data from the access network device to the terminal device. Further, the access network device designs the corresponding parameter based on the transmission requirement acknowledgment message fed back by the core network device, encapsulates the first data, and sends the encapsulated first data to the terminal device. In this way, a requirement for transfer through a user plane can be satisfied, and adaptation to a current protocol can be implemented without causing an additional problem. In other words, the access network device may agree with the core network device on a transmission requirement of the local to-be-transmitted AI model by interacting with the core network device. In addition, the access network device directly encapsulates the AI model, and sends the encapsulated AI model to the UE in a manner compatible with a current standard. After receiving the encapsulated AI model, the UE performs assembling at the PDCP layer, so that direct transmission of the AI model is completed only through an air interface, and a transmission process satisfies a transmission requirement of the access network device and the core network device.

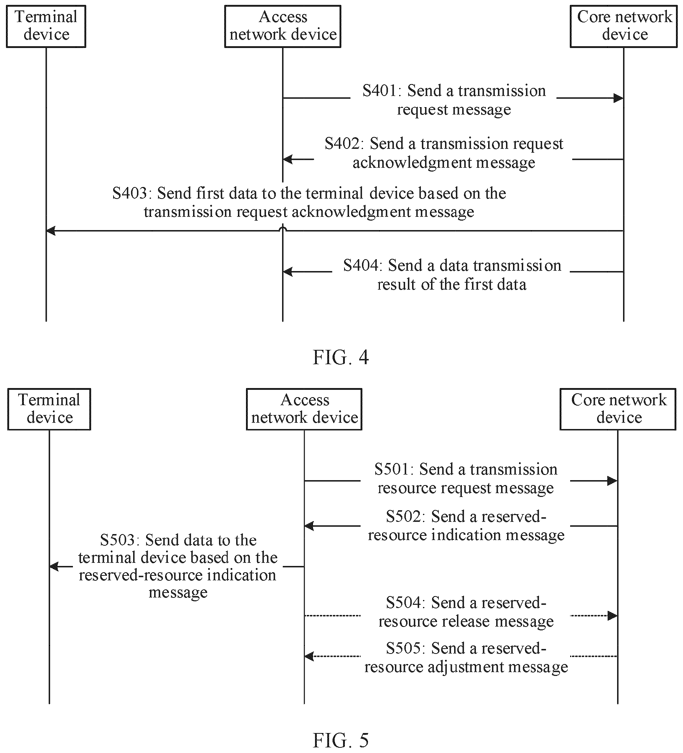

FIG. 4 is another schematic flowchart of a communication method according to an embodiment of this application. As shown in FIG. 4, the communication method includes the following steps S401 to S404. The method shown in FIG. 4 may be performed by an access network device and a core network device. Alternatively, the method shown in FIG. 4 may be performed by a chip in an access network device and a chip in a core network device. It should be noted that FIG. 4 is a schematic flowchart of a method embodiment of this application, and shows detailed communication steps or operations of the method. However, these steps or operations are merely examples. Other operations or variants of various operations in FIG. 4 may be further performed in embodiments of this application. In addition, the steps in FIG. 4 may be separately performed in a sequence different from that shown in FIG. 4, and possibly, not all operations in FIG. 4 need to be performed. FIG. 4 is described by using an example in which the access network device and the core network device perform the method.

S401: The access network device sends a transmission request message to the core network device. Accordingly, the core network device receives the transmission request message from the access network device.

In some feasible implementations, the transmission request message may indicate a transmission parameter that the access network device expects the core network device to use when the core network device sends first data to a terminal device. For example, the transmission request message may indicate one or more of the following expected transmission parameters: an identifier of the terminal device, an identifier of the first data, the first data, a transmission request identifier corresponding to the transmission request message, a scenario to which the first data is applicable, a number of a scenario to which the first data is applicable, a number of a function in a scenario to which the first data is applicable, expected transmission time corresponding to the first data, a QoS parameter corresponding to the first data, or an identifier of a PDU session corresponding to the first data.

The identifier of the terminal device may be for marking the terminal device to which data needs to be sent. For example, the identifier of the terminal device may be specifically an NGAP ID applicable to an NG interface. This is not limited herein. The identifier of the first data may be for marking the first data that needs to be sent to the terminal device. For example, the first data may be specifically an AI model or AI model data, and the identifier of the first data may be global universal model ID information, may be index information agreed on by the access network device and the core network device, or may be a number of a function corresponding to an agreed model having the function. This is not limited herein. It may be understood that the AI model in this embodiment of this application may be a complete AI model that may be independently run on a UE (a format and a compiling environment of the AI model are not limited), or may be an AI-related functional module that runs on a UE side to obtain a specific output for use on an access network device side, or the like. This is not limited herein. Optionally, the first data may alternatively be another non-AI-related functional module, other non-AI-related data, or the like. This is not limited in this embodiment of this application. However, the following mainly uses an example in which the first data is the AI model for description. The first data in the transmission request message may alternatively be understood as ontology data of the AI model. This is not limited in this solution. The transmission request identifier is for marking the transmission request message sent by the access network device this time. The scenario to which the first data is applicable may be one or more of ① energy saving, ② load balancing, ③ mobility optimization, ④ CSI-RS feedback enhancement, ⑤ beam sweeping enhancement, ⑥ positioning enhancement, or the like. Optionally, the scenario to which the first data is applicable may alternatively be another scenario in which AI is needed for resolution in the future. The foregoing six scenarios are merely examples. This is not limited herein. The expected transmission time corresponding to the first data is time that can be for completing an AI model transmission process and that is expected or required by the access network device; and may be expressed based on any time length unit, for example, 60 seconds or one minute, or may be a specific deadline for completing the transmission process, for example, before 3 p.m. The expected QoS parameter indicated by a transmission requirement message may be generated by the access network device with reference to a current air interface load status and a current resource load status. For example, the QoS parameter includes an identifier of a QoS flow expected to be reused, or the QoS parameter includes an identifier of a QoS flow expected to be newly established. For example, the identifier of the QoS flow may be a QFI or a 5QI. This is not limited herein. Optionally, when the QoS parameter includes the identifier of the QoS flow expected to be newly established, the QoS parameter may further include information such as an ARP, a GFBR, an MFBR, an AMBR, an RQA, notification control, and a maximum packet loss rate. This is not limited herein. Optionally, when the QoS parameter includes the identifier of the QoS flow expected to be reused, the QoS parameter may further include an expected QoS parameter obtained through modification, for example, an expected maximum packet loss rate obtained through modification, or information about a difference obtained by subtracting a current maximum packet loss rate from the expected maximum packet loss rate obtained through modification. This is not limited herein.

It should be noted that the transmission request message sent by the access network device to the core network device may include one or more terminal device identifiers. In other words, a quantity of terminal devices is not limited in this embodiment of this application, and a quantity of AI models on which transmission is performed is not limited for each terminal device. Optionally, a transmission requirement identifier (namely, a transmission requirement number) may be generated based on an identifier of each terminal device, or may be generated based on an ID of the AI model sent to each terminal device. This is not limited herein.

S402: The core network device sends a transmission request acknowledgment message to the access network device. Accordingly, the access network device receives the transmission request acknowledgment message from the core network device.

In some feasible implementations, after receiving the transmission request message sent by the access network device, the core network device may reply to the access network device with the transmission request acknowledgment message based on factors such as the transmission parameter expected to be used in the request and whether the request affects current normal data transmission. The transmission request acknowledgment message may indicate a transmission parameter (actually) used by the core network device when the core network device sends the first data to the terminal device.

For example, the transmission request acknowledgment message may indicate one or more of the following transmission parameters (actually) used by the core network device: an identifier of the terminal device, an identifier of the first data, a transmission request identifier corresponding to the transmission request message, a scenario to which the first data is applicable, transmission time corresponding to the first data, a QoS parameter corresponding to the first data, or an identifier of a PDU session corresponding to the first data.

For example, the transmission request acknowledgment message may be one bit. When a value of the bit is 1, the transmission request acknowledgment message indicates that the core network device agrees to and will perform model transmission based on the expected transmission parameter sent by the access network device. When a value of the bit is 0, the transmission request acknowledgment message indicates that the core network device does not agree to perform model transmission based on the expected transmission parameter sent by the access network device. Alternatively, when a value of the bit is 0, the transmission request acknowledgment message indicates that the core network device agrees to and will perform model transmission based on the expected transmission parameter sent by the access network device. When a value of the bit is 1, the transmission request acknowledgment message indicates that the core network device does not agree to perform model transmission based on the expected transmission parameter sent by the access network device. This is not limited herein. When the core network device does not agree to perform model transmission based on the expected transmission parameter sent by the access network device, the core network device may further feed back a reason. For example, a resource is inadequate, or user permission does not support the expected QoS parameter.

In another example, the transmission request acknowledgment message may alternatively indicate that some transmission parameters that are expected to be used and that are sent by the access network device in step S401 are agreed to or not agreed to. Optionally, the transmission request acknowledgment message may further indicate a reason for agreement or disagreement. Optionally, when the transmission request acknowledgment message indicates that the transmission parameter that is expected to be used and that is sent by the access network device in step S401 is not agreed to, the transmission request acknowledgment message may further indicate a transmission parameter obtained through adjustment/modification performed by the core network device. The transmission parameter obtained through adjustment/modification is a parameter actually used by the core network device.

For example, assuming that transmission parameters that are expected to be used and that are indicated by the transmission request message are expecting the core network device to send an AI model 1 to a UE 1 and send an AI model 2 to a UE 2, the transmission request acknowledgment message may indicate that transmission parameters actually used by a core network are sending the AI model 2 to the UE 1 and sending the AI model 2 to the UE 2. A reason for changing the AI model sent to the UE 1 may be that the UE 1 is authorized to use the AI model 2 rather than the AI model 1 that the access network device requests to deliver to the UE 1.

S403: The core network device sends the first data to the terminal device based on the transmission request acknowledgment message.

In some feasible implementations, the core network device may send the first data to the terminal device through a user plane based on the transmission request acknowledgment message. In other words, the core network device may send the data according to the protocols 38.415, 38.425, and 29.060.

S404: The core network device sends a data transmission result of the first data to the access network device.

In some feasible implementations, when the core network device completes model transmission, the core network device may further send the data transmission result of the first data to the access network device. For example, the core network device may choose to directly indicate, to the access network device, that all transmission tasks have been completed, for example, indicate, by using one bit, that all the transmission tasks have been completed; or may choose to feed back the transmission requirement number to indicate that corresponding transmission has been completed. In addition, the core network device may further indicate actual model transmission completion time. Optionally, if the core network device does not complete data transmission based on a requirement of the access network device, the data transmission result may further include a reason why data transmission is not completed based on the requirement. For example, when the actual model transmission completion time is greater than the transmission time expected by the access network device, a timeout reason included in the data transmission result may be that an air interface is overloaded or that an agreed QoS flow service is overloaded.

In this embodiment of this application, the access network device indicates, to the core network device, information such as the identifier of the first data that needs to be delivered to the terminal device, and the core network device sends the first data to the terminal device through the user plane. After completing data transmission, the core network device indicates the data transmission result to the access network device. In this way, a requirement for transfer through the user plane can also be satisfied, and adaptation to a current protocol can be implemented without causing an additional problem. In other words, the access network device may notify the core network device of the AI model that needs to be transmitted to the UE and specific transmission requirement information. The core network device sends the AI model to the UE by using a user plane transmission scheme supported by the current protocol, and then notifies the access network device of a sending result. This implements a process of transferring the AI model to the UE through the user plane as expected by the access network device.

FIG. 5 is another schematic flowchart of a communication method according to an embodiment of this application. As shown in FIG. 5, the communication method includes the following steps S501 to S505. The method shown in FIG. 5 may be performed by an access network device and a core network device. Alternatively, the method shown in FIG. 5 may be performed by a chip in an access network device and a chip in a core network device. It should be noted that FIG. 5 is a schematic flowchart of a method embodiment of this application, and shows detailed communication steps or operations of the method. However, these steps or operations are merely examples. Other operations or variants of various operations in FIG. 5 may be further performed in embodiments of this application. In addition, the steps in FIG. 5 may be separately performed in a sequence different from that shown in FIG. 5, and possibly, not all operations in FIG. 5 need to be performed. FIG. 5 is described by using an example in which the access network device and the core network device perform the method.

S501: The access network device sends a transmission resource request message to the core network device. Accordingly, the core network device receives the transmission resource request message from the access network device.

In some feasible implementations, the transmission resource request message may indicate time information of a reserved transmission resource expected by the access network device when the access network device sends data to a terminal device. For example, the time information of the expected reserved transmission resource includes a time period of the expected reserved transmission resource, a deadline of the expected reserved transmission resource, or duration of the expected reserved transmission resource. This is not limited herein. For example, time of a reserved transmission resource that is expected by the access network device and that can be reserved is from 1 p.m. to 4 p.m., before 4 p.m., or three hours.

Optionally, the transmission resource request message may further indicate a transmission parameter that the access network device expects to use when the access network device sends the data to the terminal device. For example, the transmission resource request message may indicate one or more of the following expected transmission parameters: an identifier of the terminal device, an identifier of the data, a data amount corresponding to the data, a transmission resource request identifier corresponding to the transmission resource request message, a scenario to which the data is applicable, a number of a scenario to which the data is applicable, a number of a function in a scenario to which the data is applicable, expected transmission time corresponding to the data, a quality of service QoS parameter corresponding to the data, or an identifier of a protocol data unit PDU session corresponding to the data.

The identifier of the terminal device may be for marking the terminal device to which data needs to be sent. For example, the identifier of the terminal device may be specifically an NGAP ID applicable to an NG interface. This is not limited herein. The identifier of the data may be for marking the data that needs to be sent to the terminal device. For example, the data may be specifically an AI model or AI model data, and the identifier of the data may be global universal model ID information, may be index information agreed on by the access network device and the core network device, or may be a number of a function corresponding to an agreed model having the function. This is not limited herein. It may be understood that the AI model in this embodiment of this application may be a complete AI model that may be independently run on a UE (a format and a compiling environment of the AI model are not limited), or may be an AI-related functional module that runs on a UE side to obtain a specific output for use on an access network device side, other non-AI-related data, or the like. This is not limited herein. Optionally, the data may alternatively be another non-AI-related functional module. This is not limited in this embodiment of this application. However, the following mainly uses an example in which the data is the AI model for description. The data amount indicates a specific data amount of the data that needs to be sent, for example, 500 MB. The transmission resource request identifier is for marking the transmission resource request message sent by the access network device this time. The scenario to which the data is applicable may be one or more of ① energy saving, ② load balancing, ③ mobility optimization, ④ CSI-RS feedback enhancement, ⑤ beam sweeping enhancement, ⑥ positioning enhancement, or the like. Optionally, the scenario to which the first data is applicable may alternatively be another scenario in which AI is needed for resolution in the future. The foregoing six scenarios are merely examples. This is not limited herein. The expected transmission time corresponding to the data is time that can be for completing an AI model transmission process and that is expected or required by a gNB; and may be expressed based on any time length unit, for example, 60 seconds or one minute, or may be a specific deadline for completing the transmission process, for example, before 3 p.m. The expected QoS parameter indicated by a transmission requirement message may be generated by the access network device with reference to a current air interface load status and a current resource load status. For example, the QoS parameter includes an identifier of a QoS flow expected to be reused, or the QoS parameter includes an identifier of a QoS flow expected to be newly established. For example, the identifier of the QoS flow may be a quality of service flow identifier (QoS flow identifier, QFI) or a 5G quality of service identifier (5G QoS Identifier, 5QI). This is not limited herein. Optionally, when the QoS parameter includes the identifier of the QoS flow expected to be newly established, the QoS parameter may further include information such as an ARP, a GFBR, an MFBR, an AMBR, an RQA, notification control, and a maximum packet loss rate. This is not limited herein. Optionally, when the QoS parameter includes the identifier of the QoS flow expected to be reused, the QoS parameter may further include an expected QoS parameter obtained through modification, for example, an expected maximum packet loss rate obtained through modification, or information about a difference obtained by subtracting a current maximum packet loss rate from the expected maximum packet loss rate obtained through modification. This is not limited herein.

It should be noted that the transmission resource request message sent by the access network device to the core network device may include one or more terminal device identifiers. In other words, a quantity of terminal devices is not limited in this embodiment of this application, and a quantity of AI models on which transmission is performed is not limited for each terminal device.

S502: The core network device sends a reserved-resource indication message to the access network device. Accordingly, the access network device receives the reserved-resource indication message from the core network device.

In some feasible implementations, after receiving the transmission resource request message sent by the access network device, the core network device may reply to the access network device with the reserved-resource indication message based on factors such as the time information of the expected reserved transmission resource and the transmission parameter expected to be used in the requirement and whether the requirement affects current normal data transmission. The reserved-resource indication message may indicate time information of a reserved transmission resource that is allocated/allowed by the core network device and that is for the access network device to send the data to the terminal device. For example, the time information of the allocated reserved transmission resource includes a time period of the allocated reserved transmission resource or a deadline of the allocated reserved transmission resource. This is not limited herein. For example, time of the reserved transmission resource allocated by the core network device to the access network device is from 1 p.m. to 4 p.m. or before 4 p.m.

Optionally, the reserved-resource indication message may further indicate a transmission parameter that is allowed by the core network device and that is used when the access network device sends the data to the terminal device. For example, the reserved-resource indication message may indicate one or more of the following transmission parameters allowed to be used: an identifier of the terminal device, an identifier of the data, a data amount corresponding to the data, a transmission resource request identifier corresponding to the transmission resource request message, a scenario to which the data is applicable, transmission time corresponding to the data, a QoS parameter corresponding to the data, or an identifier of a PDU session corresponding to the data.

For example, the reserved-resource indication message may be one bit. When a value of the bit is 1, the reserved-resource indication message indicates that the core network device agrees to let the access network device use all transmission parameters and the reserved transmission resource expected by the access network device. When a value of the bit is 0, the reserved-resource indication message indicates that the core network device does not agree to let the access network device use all transmission parameters and the reserved transmission resource expected by the access network device. Alternatively, when a value of the bit is 0, the reserved-resource indication message indicates that the core network device agrees to let the access network device use all transmission parameters and the reserved transmission resource expected by the access network device. When a value of the bit is 1, the reserved-resource indication message indicates that the core network device does not agree to let the access network device use all transmission parameters and the reserved transmission resource expected by the access network device.

In another example, the reserved-resource indication message may alternatively indicate that the core network device agrees or does not agree to let the access network device use some transmission parameters and the reserved transmission resource expected by the access network device. Optionally, the reserved-resource indication message may further indicate a reason for agreement or disagreement. Optionally, when the reserved-resource indication message indicates that the transmission parameter expected to be used and the expected reserved transmission resource that are sent by the access network device in step S501 are not agreed to, the reserved-resource indication message may further indicate a transmission parameter and a reserved transmission resource that are obtained through adjustment/modification performed by the core network device. The transmission parameter and the reserved transmission resource that are obtained through adjustment/modification are a transmission parameter and a reserved transmission resource that the core network device agrees to let the access network device use/allows the access network device to use.

For example, assuming that the expected reserved transmission resource indicated by the transmission resource request message is from 1 p.m. to 4 p.m., and transmission parameters expected to be used are sending an AI model 1 and an AI model 2 to a UE 1 and sending the AI model 2 to a UE 2, the reserved-resource indication message may indicate that the allocated reserved transmission resource is from 1 p.m. to 3 p.m. and that transmission parameters allowed to be used are sending the AI model 1 to the UE 1 and sending the AI model 2 to the UE 2.

It should be noted that the core network device may choose to include, in a charging consideration range, a finally determined amount of the data transferred by the access network device to the terminal device.

S503: The access network device sends the data to the terminal device based on the reserved-resource indication message. Accordingly, the terminal device receives the data from the access network device.

In some feasible implementations, that the access network device sends the data to the terminal device based on the reserved-resource indication message may be understood as that the access network device sends the data to the terminal device based on the reserved-resource indication message through a service data adaptation protocol (service data adaptation protocol, SDAP) layer. In other words, after the access network device receives the reserved-resource indication message fed back by the core network device, the access network device may map a QoS flow to a DRB through the SDAP layer within the allocated reserved transmission resource. It should be noted that, because the data (for example, the AI model) is locally in the access network device, the access network device may choose to encapsulate the to-be-transmitted AI model based on the encapsulation format (as shown in Table 1) of the data sent by the UPF to the access network device, or may choose to encapsulate the to-be-transmitted AI model in a manner of indicating only a key field. For example, for a structure of a packet header sent by the SDAP layer to a PDCP layer, refer to the related descriptions of step S303 in FIG. 3. Details are not described herein again.

It should be noted that the SDAP layer of the access network device maps the corresponding QoS flow to the DRB, namely, a PDCP entity, based on the QoS parameter corresponding to the AI model. When performing encapsulation, the PDCP entity may encapsulate a PDCP layer data packet (PDCP packet for short) based on a packet size limitation that does not exceed 9 KB, and additionally indicate whether the packet is a transmission packet of the AI model (or may indicate, to the UE in a DRB reconfiguration manner, a frame number or a number of a PDCP packet for transmission of the AI model). If indication is directly performed in the PDCP packet, the Spare field in the PDCP packet header may be used to add an indication. For example, that transmission content of the packet is the AI model, whether the packet is a 1^{st} packet, and whether the packet is a last packet are indicated. An AI model whose transmission is performed via the packet may be further indicated. For example, a model ID or the index information agreed on by the access network device and the UE is added. If indication is performed in the DRB reconfiguration manner, the access network device may choose to indicate a frame number or a number of a specific PDCP packet for transmission of the AI model or indicate a frame arrangement rule of the PDCP packet for transmission of the AI model. For example, all packets whose frame numbers or numbers mod 5=0 are for transmission of the AI model. Optionally, the identification information of the model whose transmission is performed via the PDCP packet may alternatively be indicated in the DRB reconfiguration indication manner.

In other words, a PDCP layer data packet corresponding to the data may directly include first indication information, and the first indication information indicates a type of the AI model. Optionally, when the data corresponds to a plurality of PDCP layer data packets, that is, when the data is disassembled into the plurality of PDCP layer data packets for transmission, the first indication information further indicates a frame number or a frame arrangement rule of a PDCP layer data packet in which the first indication information is located, to ensure that the segmented AI model can be correctly assembled on the UE side. Optionally, in another implementation, the access network device may further send radio resource control (radio resource control, RRC) signaling to the terminal device. The RRC signaling may be specifically a DRB reconfiguration message. The RRC signaling includes first indication information, and the first indication information indicates a type of the AI model. Optionally, when the data corresponds to a plurality of PDCP layer data packets, the first indication information further indicates frame numbers or a frame arrangement rule of the plurality of PDCP layer data packets, to ensure that the segmented AI model can be correctly assembled on the UE side.

S504: The access network device sends a reserved-resource release message to the core network device. Accordingly, the core network device receives the reserved-resource release message from the access network device.

In some feasible implementations, the reserved-resource release message indicates the core network device to release the reserved transmission resource allocated by the core network device to the access network device. For example, when the access network device completes data (for example, the AI model) transmission, and the reserved transmission resource has ended, the access network device may choose to send the reserved-resource release message to the core network device, to indicate that a transmission task has been completed. The core network device releases the previously reserved transmission resource. Optionally, the core network device may further feed back a release success response message to the access network device. In another example, when the access network device completes data (for example, the AI model) transmission, and the reserved transmission resource has not ended, the access network device may alternatively choose to send the reserved-resource release message to the core network device, to indicate that a transmission task has been completed. The previously reserved transmission resource is released in advance.

Optionally, the access network device may further send a reserved-resource adjustment request message to the core network device. The reserved-resource adjustment request message is for requesting the core network device to adjust the allocated reserved transmission resource. For example, requesting to adjust the allocated reserved transmission resource may be requesting to prolong reserved transmission duration or requesting to shorten reserved transmission duration. This is not limited herein. Therefore, the core network device may send a reserved-resource adjustment message to the access network device based on the received reserved-resource adjustment request message. The reserved-resource adjustment message indicates to adjust the reserved transmission resource allocated by the core network device to the access network device. In other words, if the access network device determines that the current reserved transmission resource is inappropriate, for example, a priority is excessively low or is not necessarily excessively high, the access network device may choose to send, to the core network device within reservation time or after reservation time ends, a solution and a reason for adjusting the reserved transmission resource. Optionally, the reserved-resource adjustment request message may alternatively be sent by the UE to the core network device via the access network device. This is specifically determined based on an actual scenario, and is not limited herein.

Step S504 is an optional step.

S505: The core network device sends the reserved-resource adjustment message to the access network device. Accordingly, the access network device receives the reserved-resource adjustment message from the core network device.

In some feasible implementations, the core network device may alternatively actively choose, based on a load status of data transmission, to indicate the access network device to terminate the resource reservation in advance, prolong the resource reservation time, or modify a configuration of the reserved transmission resource. For example, if transmission of the AI model has affected transmission of other conventional user plane data of the core network device, the access network device may be indicated to terminate resource reservation in advance or reduce a reserved-resource transmission priority (reflected in the QoS parameter). In other words, the core network device directly sends the reserved-resource adjustment message to the access network device, where the reserved-resource adjustment message indicates to adjust the reserved transmission resource allocated by the core network device to the access network device.

Step S505 is an optional step.

In this embodiment of this application, the access network device applies, to the core network device based on a requirement of the access network device, for a segment of reserved resources specially used for sending the data (for example, the AI model), so that the access network device can send data to the terminal device within the segment of reserved resources successfully applied for. In this way, a requirement for transfer through a user plane can be satisfied, and adaptation to a current protocol can be implemented without causing an additional problem. In this embodiment of this application, because the access network device may continuously send the AI model to the UE through the user plane by using the reserved resource within a period of time, in comparison with that a process in which a user plane is newly established for transmission each time needs interaction with the core network device, this solution reduces signaling overheads of the access network device and the core network device on an NG interface.

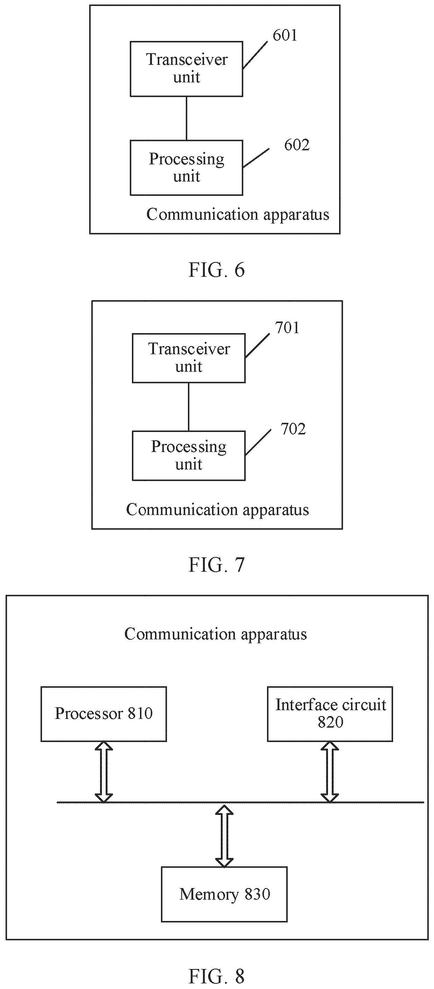

With reference to FIG. 6 to FIG. 8, the following describes in detail the communication apparatus provided in this application.

It may be understood that, in the foregoing implementations, to implement the foregoing functions, each device includes a corresponding hardware structure and/or software module for performing each function. A person skilled in the art should be easily aware that, with reference to the units and the algorithm steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the access network device or the core network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, the division into the modules is an example, and is merely logical function division. In actual implementation, another division manner may be used.

FIG. 6 is a diagram of a structure of a communication apparatus according to an embodiment of this application. The communication apparatus shown in FIG. 6 may be configured to perform some or all functions of the access network device in the method embodiments described in FIG. 3 to FIG. 5. The apparatus may be an access network device, an apparatus in the access network device, or an apparatus that can be used together with the access network device. The communication apparatus may alternatively be a chip or a chip system. The communication apparatus shown in FIG. 6 may include a transceiver unit 601 and a processing unit 602. The processing unit 602 is configured to perform data processing. The transceiver unit 601 is integrated with a receiving unit and a sending unit. The transceiver unit 601 may also be referred to as a communication unit. Alternatively, the transceiver unit 601 may be split into a receiving unit and a sending unit. The processing unit 602 and the transceiver unit 601 hereinafter are similar to those. Details are not described hereinafter again.

In an implementation:
The transceiver unit 601 is configured to send a transmission requirement message to a core network device, where the transmission requirement message indicates a transmission parameter that the access network device expects to use when the access network device sends first data to a terminal device;
the transceiver unit 601 is configured to receive a transmission requirement acknowledgment message from the core network device, where the transmission requirement acknowledgment message indicates a transmission parameter that is allowed by the core network device and that is used when the access network device sends the first data to the terminal device; and
the processing unit 602 is configured to send the first data to the terminal device by using the transceiver unit 601 based on the transmission requirement acknowledgment message.

In a possible implementation, the first data is artificial intelligence AI model data.

In a possible implementation, the transmission requirement message indicates one or more of the following transmission parameters:
an identifier of the terminal device, an identifier of the first data, the first data amount corresponding to the first data, a transmission requirement identifier corresponding to the transmission requirement message, a scenario to which the first data is applicable, expected transmission time corresponding to the first data, a quality of service QoS parameter corresponding to the first data, or an identifier of a protocol data unit PDU session corresponding to the first data.

In a possible implementation, the QoS parameter includes an identifier of a QoS flow expected to be reused, or the QoS parameter includes an identifier of a QoS flow expected to be newly established.

In a possible implementation, a packet data convergence protocol PDCP layer data packet corresponding to the first data includes first indication information, and the first indication information indicates a type of an AI model.

In a possible implementation, the first data corresponds to a plurality of PDCP layer data packets; and
the first indication information further indicates a frame number of the PDCP layer data packet in which the first indication information is located.

In a possible implementation, the transceiver unit 601 is further configured to:
send radio resource control RRC signaling to the terminal device, where the RRC signaling includes first indication information, and the first indication information indicates a type of an AI model.

In a possible implementation, the first data corresponds to a plurality of PDCP layer data packets; and
the first indication information further indicates frame numbers of the plurality of PDCP layer data packets.

In a possible implementation, the processing unit 602 is further configured to:
send the first data to the terminal device based on the transmission requirement acknowledgment message through a service data adaptation protocol SDAP layer.

In another implementation:

The transceiver unit 601 is configured to send a transmission request message to a core network device, where the transmission request message indicates a transmission parameter that the access network device expects the core network device to use when the core network device sends first data to a terminal device;
the transceiver unit 601 is configured to receive a transmission request acknowledgment message from the core network device, where the transmission request acknowledgment message indicates a transmission parameter used by the core network device when the core network device sends the first data to the terminal device; and
the transceiver unit 601 is configured to receive a data transmission result of the first data from the core network device.

In a possible implementation, the first data is artificial intelligence AI model data.

In a possible implementation, the transmission request message includes one or more of the following transmission parameters:
an identifier of the terminal device, an identifier of the first data, the first data, a transmission request identifier corresponding to the transmission request message, a scenario to which the first data is applicable, expected transmission time corresponding to the first data, a quality of service QoS parameter corresponding to the first data, or an identifier of a protocol data unit PDU session corresponding to the first data.

In another implementation:

The transceiver unit 601 is configured to send a transmission resource request message to a core network device, where the transmission resource request message indicates time information of a reserved transmission resource expected by the access network device when the access network device sends data to a terminal device;
the transceiver unit 601 is configured to receive a reserved-resource indication message from the core network device, where the reserved-resource indication message indicates time information of a reserved transmission resource that is allocated by the core network device and that is for the access network device to send the data to the terminal device; and
the processing unit 602 is configured to send the data to the terminal device by using the transceiver unit 601 based on the reserved-resource indication message.

In a possible implementation, the transceiver unit 601 is further configured to:
send a reserved-resource release message to the core network device, where the reserved-resource release message indicates the core network device to release the reserved transmission resource allocated by the core network device to the access network device; or
receive a reserved-resource adjustment message from the core network device, where the reserved-resource adjustment message indicates to adjust the reserved transmission resource allocated by the core network device to the access network device.

In a possible implementation, the transceiver unit 601 is further configured to:
send a reserved-resource adjustment request message to the core network device, where the reserved-resource adjustment request message is for requesting the core network device to adjust the allocated reserved transmission resource; and
receive a reserved-resource adjustment message from the core network device, where the reserved-resource adjustment message indicates to adjust the reserved transmission resource allocated by the core network device to the access network device.

In a possible implementation, the first data is artificial intelligence AI model data.

In a possible implementation, the time information of the reserved transmission resource includes a time period of the reserved transmission resource or a deadline of the reserved transmission resource.

In a possible implementation, the transmission resource request message further indicates a transmission parameter that the access network device expects to use when the access network device sends the data to the terminal device.

In a possible implementation, the transmission resource request message indicates one or more of the following transmission parameters:
an identifier of the terminal device, an identifier of the data, a data amount corresponding to the data, a transmission resource request identifier corresponding to the transmission resource request message, a scenario to which the data is applicable, expected transmission time corresponding to the data, a quality of service QoS parameter corresponding to the data, or an identifier of a protocol data unit PDU session corresponding to the data.

For another possible implementation of the communication apparatus, refer to the related descriptions of the functions of the access network device in the method embodiments corresponding to FIG. 3 and FIG. 5. Details are not described herein.

FIG. 7 is a diagram of a structure of another communication apparatus according to an embodiment of this application. The communication apparatus shown in FIG. 7 may be configured to perform some or all functions of the core network device in the method embodiments described in FIG. 3 to FIG. 5. The apparatus may be a core network device, an apparatus in the core network device, or an apparatus that can be used together with the core network device. The communication apparatus may alternatively be a chip or a chip system. The communication apparatus shown in FIG. 7 may include a transceiver unit 701 and a processing unit 702.

In an implementation:
The transceiver unit 701 is configured to receive a transmission requirement message from an access network device, where the transmission requirement message indicates a transmission parameter that the access network device expects to use when the access network device sends first data to a terminal device; and
the transceiver unit 701 is configured to send a transmission requirement acknowledgment message to the access network device, where the transmission requirement acknowledgment message indicates a transmission parameter that is allowed by the core network device and that is used when the access network device sends the first data to the terminal device.

In a possible implementation, the first data is artificial intelligence AI model data.

In a possible implementation, the transmission requirement message indicates one or more of the following transmission parameters:
an identifier of the terminal device, an identifier of the first data, the first data amount corresponding to the first data, a transmission requirement identifier corresponding to the transmission requirement message, a scenario to which the first data is applicable, expected transmission time corresponding to the first data, a quality of service QoS parameter corresponding to the first data, or an identifier of a protocol data unit PDU session corresponding to the first data.

In a possible implementation, the QoS parameter includes an identifier of a QoS flow expected to be reused, or the QoS parameter includes an identifier of a QoS flow expected to be newly established.

In a possible implementation, a packet data convergence protocol PDCP layer data packet corresponding to the first data includes first indication information, and the first indication information indicates a type of an AI model.

In a possible implementation, the first data corresponds to a plurality of PDCP layer data packets; and
the first indication information further indicates a frame number of the PDCP layer data packet in which the first indication information is located.

In another implementation:

The transceiver unit 701 is configured to receive a transmission request message from an access network device, where the transmission request message indicates a transmission parameter that the access network device expects the core network device to use when the core network device sends first data to a terminal device;
the transceiver unit 701 is configured to send a transmission request acknowledgment message to the access network device, where the transmission request acknowledgment message indicates a transmission parameter used by the core network device when the core network device sends the first data to the terminal device;
the processing unit 702 is configured to send the first data to the terminal device based on the transmission request acknowledgment message; and
the transceiver unit 701 is configured to send a data transmission result of the first data to the access network device.

In a possible implementation, the first data is artificial intelligence AI model data.

In a possible implementation, the transmission request message includes one or more of the following transmission parameters:
an identifier of the terminal device, an identifier of the first data, the first data, a transmission request identifier corresponding to the transmission request message, a scenario to which the first data is applicable, expected transmission time corresponding to the first data, a quality of service QoS parameter corresponding to the first data, or an identifier of a protocol data unit PDU session corresponding to the first data.

In another implementation:

The transceiver unit 701 is configured to receive a transmission resource request message from an access network device, where the transmission resource request message indicates time information of a reserved transmission resource expected by the access network device when the access network device sends data to a terminal device; and
the transceiver unit 701 is configured to send a reserved-resource indication message to the access network device, where the reserved-resource indication message indicates time information of a reserved transmission resource that is allocated by the core network device and that is for the access network device to send the data to the terminal device.

In a possible implementation, the transceiver unit 701 is further configured to:
receive a reserved-resource release message from the access network device, where the reserved-resource release message indicates the core network device to release the reserved transmission resource allocated by the core network device to the access network device; or
send a reserved-resource adjustment message to the access network device, where the reserved-resource adjustment message indicates to adjust the reserved transmission resource allocated by the core network device to the access network device.

In a possible implementation, the transceiver unit 701 is further configured to:
receive a reserved-resource adjustment request message from the access network device, where the reserved-resource adjustment request message is for requesting the core network device to adjust the allocated reserved transmission resource; and
send a reserved-resource adjustment message to the access network device, where the reserved-resource adjustment message indicates to adjust the reserved transmission resource allocated by the core network device to the access network device.

In a possible implementation, the first data is artificial intelligence AI model data.

In a possible implementation, the time information of the reserved transmission resource includes a time period of the reserved transmission resource or a deadline of the reserved transmission resource.

In a possible implementation, the transmission resource request message further indicates a transmission parameter that the access network device expects to use when the access network device sends the data to the terminal device.

In a possible implementation, the transmission resource request message indicates one or more of the following transmission parameters:
an identifier of the terminal device, an identifier of the data, a data amount corresponding to the data, a transmission resource request identifier corresponding to the transmission resource request message, a scenario to which the data is applicable, expected transmission time corresponding to the data, a quality of service QoS parameter corresponding to the data, or an identifier of a protocol data unit PDU session corresponding to the data.

For another possible implementation of the communication apparatus, refer to the related descriptions of the functions of the core network device in the method embodiments corresponding to FIG. 3 and FIG. 5. Details are not described herein.

In a possible implementation, when the access network device or the core network device is the chip, the transceiver unit may be a communication interface, a pin, a circuit, or the like. The communication interface may be configured to input to-be-processed data into a processor, and may output a processing result of the processor to the outside. During specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing unit may be a processor, and the processor may execute computer-executable instructions stored in a storage unit, so that the chip performs the methods in FIG. 3 to FIG. 5.

Further, the processor may include a controller, an arithmetic unit, and a register. For example, the controller is mainly responsible for instruction decoding, and sending a control signal for an operation corresponding to the instructions. The arithmetic unit is mainly responsible for performing a fixed-point or floating-point arithmetic operation, a shift operation, a logic operation, and the like, and may also perform address arithmetic and address translation. The register is mainly responsible for storing a register operand, an intermediate operation result, and the like that are temporarily stored in an instruction execution process. During specific implementation, a hardware architecture of the processor may be an ASIC architecture, a microprocessor without interlocked pipeline stages (microprocessor without interlocked pipeline stages, MIPS) architecture, an advanced reduced instruction set computing machines (advanced RISC machines, ARM) architecture, a network processor (network processor, NP) architecture, or the like. The processor may be a single-core or multi-core processor.

The storage unit may be a storage unit in the chip, for example, a register or a cache. Alternatively, the storage unit may be a storage unit located outside the chip, for example, a ROM, another type of static storage device that can store static information and instructions, or a RAM.

It should be noted that a function corresponding to each of the processor and the interface may be implemented by using a hardware design, may be implemented by using a software design, or may be implemented by a combination of software and hardware. This is not limited herein.

FIG. 8 is a diagram of a structure of another communication apparatus according to an embodiment of this application. The communication apparatus includes a processor 810 and an interface circuit 820. The processor 810 and the interface circuit 820 are coupled to each other. It may be understood that the interface circuit 820 may be a transceiver or an input/output interface. Optionally, the communication apparatus may further include a memory 830, configured to store instructions to be executed by the processor 810, or store input data needed by the processor 810 to run the instructions, or store data generated by running the instructions by the processor 810.

When the communication apparatus is configured to implement the methods in the foregoing method embodiments, the processor 810 is configured to perform a function of the foregoing processing unit, and the interface circuit 820 is configured to perform a function of the foregoing transceiver unit.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information to the storage medium. Certainly, the storage medium may alternatively be a component of the processor. The processor and the storage medium may be located in an ASIC. In addition, the ASIC may be located in the access network device or the core network device. Certainly, the processor and the storage medium may alternatively exist in the access network device or the core network device as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or transmission of the computer programs or the instructions may be performed by using the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a digital versatile disc (digital versatile disc, DVD); or may be a semiconductor medium, for example, a solid-state drive (solid-state drive, SSD).

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not for limiting the scope of embodiments of this application. Sequential numbers of the foregoing processes do not mean execution sequences. The execution sequences of the processes should be determined based on functions and internal logic of the processes.

An embodiment of this application further provides a computer-readable storage medium. The computer-readable storage medium stores computer-executable instructions. When the computer-executable instructions are executed, the methods performed by the access network device or the core network device in the foregoing method embodiments are implemented.

An embodiment of this application further provides a computer program product. The computer program product includes a computer program. When the computer program is executed, the methods performed by the access network device or the core network device in the foregoing method embodiments are implemented.

An embodiment of this application further provides a communication system. The communication system includes an access network device and a core network device. The access network device is configured to perform the methods performed by the access network device in the foregoing method embodiments. The core network device is configured to perform the methods performed by the core network device in the foregoing method embodiments.

It should be noted that, for brief description, the foregoing method embodiments are all represented as a series of action combinations. However, a person skilled in the art should appreciate that this application is not limited to the described order of the actions, because according to this application, some steps may be performed in other orders or simultaneously. It should also be appreciated by a person skilled in the art that embodiments described in this specification all belong to example embodiments, and the actions and the modules are not necessarily needed by this application.

The descriptions of embodiments provided in this application may refer to each other, and the descriptions of embodiments have different focuses. For a part not described in detail in an embodiment, refer to the related descriptions in another embodiment. For ease of description and brevity, for example, for functions of the apparatuses and devices provided in embodiments of this application and performed steps, refer to the related descriptions in the method embodiments of this application. The method embodiments and the apparatus embodiments may also be mutually referenced, combined, or cited.

A person of ordinary skill in the art may be aware that, with reference to the units and the steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the foregoing apparatus embodiment is merely an example. For example, the division into the units is merely logical function division. Units described as separate components may be or may not be physically separate, and components displayed as units may be or may not be physical units, that is, may be located in one position, or may be distributed on a plurality of network units. Some or all of the units may be selected based on actual requirements to achieve the objectives of the solutions in embodiments.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The computer-readable storage medium may be any usable medium that can be accessed by a computer. By way of example but not limitation, the computer-readable medium may include a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc storage, a magnetic disk storage medium, another magnetic storage device, or any other medium that can be for carrying or storing expected program code in a form of instructions or a data structure and that can be accessed by a computer. In addition, by way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus random access memory (direct rambus RAM, DR RAM).

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, applied to an access network device, wherein the method comprises:
sending a transmission requirement message to a core network device, wherein the transmission requirement message indicates a transmission parameter that the access network device expects to use when the access network device sends first data to a terminal device;
receiving a transmission requirement acknowledgment message from the core network device, wherein the transmission requirement acknowledgment message indicates a transmission parameter that is allowed by the core network device and that is used when the access network device sends the first data to the terminal device; and
sending the first data to the terminal device based on the transmission requirement acknowledgment message.

2. The method according to claim 1, wherein the first data is artificial intelligence AI model data.

3. The method according to claim 1 or 2, wherein the transmission requirement message indicates one or more of the following transmission parameters:
an identifier of the terminal device, an identifier of the first data, the first data amount corresponding to the first data, a transmission requirement identifier corresponding to the transmission requirement message, a scenario to which the first data is applicable, expected transmission time corresponding to the first data, a quality of service QoS parameter corresponding to the first data, or an identifier of a protocol data unit PDU session corresponding to the first data.

4. The method according to claim 3, wherein the QoS parameter comprises an identifier of a QoS flow expected to be reused, or the QoS parameter comprises an identifier of a QoS flow expected to be newly established.

5. The method according to claim 2, wherein a packet data convergence protocol PDCP layer data packet corresponding to the first data comprises first indication information, and the first indication information indicates a type of an AI model.

6. The method according to claim 5, wherein the first data corresponds to a plurality of PDCP layer data packets; and
the first indication information further indicates a frame number of the PDCP layer data packet in which the first indication information is located.

7. The method according to claim 2, wherein the method further comprises:
sending radio resource control RRC signaling to the terminal device, wherein the RRC signaling comprises first indication information, and the first indication information indicates a type of an AI model.

8. The method according to claim 7, wherein the first data corresponds to a plurality of PDCP layer data packets; and
the first indication information further indicates frame numbers of the plurality of PDCP layer data packets.

9. A communication method, applied to an access network device, wherein the method comprises:
sending a transmission request message to a core network device, wherein the transmission request message indicates a transmission parameter that the access network device expects the core network device to use when the core network device sends first data to a terminal device;
receiving a transmission request acknowledgment message from the core network device, wherein the transmission request acknowledgment message indicates a transmission parameter used by the core network device when the core network device sends the first data to the terminal device; and
receiving a data transmission result of the first data from the core network device.

10. The method according to claim 9, wherein the first data is artificial intelligence AI model data.

11. The method according to claim 9 or 10, wherein the transmission request message comprises one or more of the following transmission parameters:
an identifier of the terminal device, an identifier of the first data, the first data, a transmission request identifier corresponding to the transmission request message, a scenario to which the first data is applicable, expected transmission time corresponding to the first data, a quality of service QoS parameter corresponding to the first data, or an identifier of a protocol data unit PDU session corresponding to the first data.

12. A communication method, applied to an access network device, wherein the method comprises:
sending a transmission resource request message to a core network device, wherein the transmission resource request message indicates time information of a reserved transmission resource expected by the access network device when the access network device sends data to a terminal device;
receiving a reserved-resource indication message from the core network device, wherein the reserved-resource indication message indicates time information of a reserved transmission resource that is allocated by the core network device and that is for the access network device to send the data to the terminal device; and
sending the data to the terminal device based on the reserved-resource indication message.

13. The method according to claim 12, wherein the method further comprises:
sending a reserved-resource release message to the core network device, wherein the reserved-resource release message indicates the core network device to release the reserved transmission resource allocated by the core network device to the access network device; or
receiving a reserved-resource adjustment message from the core network device, wherein the reserved-resource adjustment message indicates to adjust the reserved transmission resource allocated by the core network device to the access network device.

14. The method according to claim 12, wherein the method further comprises:
sending a reserved-resource adjustment request message to the core network device, wherein the reserved-resource adjustment request message is for requesting the core network device to adjust the allocated reserved transmission resource; and
receiving a reserved-resource adjustment message from the core network device, wherein the reserved-resource adjustment message indicates to adjust the reserved transmission resource allocated by the core network device to the access network device.

15. The method according to any one of claims 12 to 14, wherein the first data is artificial intelligence AI model data.

16. The method according to any one of claims 12 to 15, wherein the time information of the reserved transmission resource comprises a time period of the reserved transmission resource or a deadline of the reserved transmission resource.

17. The method according to any one of claims 12 to 16, wherein the transmission resource request message further indicates a transmission parameter that the access network device expects to use when the access network device sends the data to the terminal device.

18. The method according to claim 17, wherein the transmission resource request message indicates one or more of the following transmission parameters:
an identifier of the terminal device, an identifier of the data, a data amount corresponding to the data, a transmission resource request identifier corresponding to the transmission resource request message, a scenario to which the data is applicable, expected transmission time corresponding to the data, a quality of service QoS parameter corresponding to the data, or an identifier of a protocol data unit PDU session corresponding to the data.

19. A communication method, applied to a core network device, and comprising:
receiving a transmission requirement message from an access network device, wherein the transmission requirement message indicates a transmission parameter that the access network device expects to use when the access network device sends first data to a terminal device; and
sending a transmission requirement acknowledgment message to the access network device, wherein the transmission requirement acknowledgment message indicates a transmission parameter that is allowed by the core network device and that is used when the access network device sends the first data to the terminal device.

20. A communication method, applied to a core network device, and comprising:
receiving a transmission request message from an access network device, wherein the transmission request message indicates a transmission parameter that the access network device expects the core network device to use when the core network device sends first data to a terminal device;
sending a transmission request acknowledgment message to the access network device, wherein the transmission request acknowledgment message indicates a transmission parameter used by the core network device when the core network device sends the first data to the terminal device;
sending the first data to the terminal device based on the transmission request acknowledgment message; and
sending a data transmission result of the first data to the access network device.

21. A communication method, applied to an access network device, and comprising:
receiving a transmission resource request message from the access network device, wherein the transmission resource request message indicates time information of a reserved transmission resource expected by the access network device when the access network device sends data to a terminal device; and
sending a reserved-resource indication message to the access network device, wherein the reserved-resource indication message indicates time information of a reserved transmission resource that is allocated by the core network device and that is for the access network device to send the data to the terminal device.

22. The method according to claim 21, wherein the method further comprises:
receiving a reserved-resource release message from the access network device, wherein the reserved-resource release message indicates the core network device to release the reserved transmission resource allocated by the core network device to the access network device; or
sending a reserved-resource adjustment message to the access network device, wherein the reserved-resource adjustment message indicates to adjust the reserved transmission resource allocated by the core network device to the access network device.

23. The method according to claim 21, wherein the method further comprises:
receiving a reserved-resource adjustment request message from the access network device, wherein the reserved-resource adjustment request message is for requesting the core network device to adjust the allocated reserved transmission resource; and
sending a reserved-resource adjustment message to the access network device, wherein the reserved-resource adjustment message indicates to adjust the reserved transmission resource allocated by the core network device to the access network device.

24. A communication apparatus, comprising a unit or a module configured to perform the method according to any one of claims 1 to 18.

25. A communication apparatus, comprising a unit or a module configured to perform the method according to any one of claims 20 to 23.

26. A communication apparatus, comprising:
one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 1 to 18.

27. A communication apparatus, comprising:
one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 20 to 23.

28. A computer-readable storage medium, wherein the storage medium stores a computer program or instructions; and when the computer program or the instructions are executed by a computer, the method according to any one of claims 1 to 18 is implemented.

29. A computer-readable storage medium, wherein the storage medium stores a computer program or instructions; and when the computer program or the instructions are executed by a computer, the method according to any one of claims 20 to 23 is implemented.

30. A computer program product, comprising computer program code, wherein when the computer program code is run on a computer, the method according to any one of claims 1 to 18 is implemented.

31. A computer program product, comprising computer program code, wherein when the computer program code is run on a computer, the method according to any one of claims 20 to 23 is implemented.
